# EUROPÄISCHE PATENTSCHRIFT

(11) **EP 3 736 235 B1**
(45) Veröffentlichungstag und Bekanntmachung des Hinweises auf die Patenterteilung: **31.03.2021**
(21) Anmeldenummer: 19000221.2
(22) Anmeldetag: 07.05.2019
(51) Int. Cl.: B65H 31/30, B25J 15/10, B65G 61/00, B65H 45/12, B65H 31/34, B25J 15/02, B65G 47/90

(54) **HANDHABUNGSVORRICHTUNG FÜR STAPEL VON FALZPRODUKTEN, ENTSPRECHENDE FALZMASCHINE, UND VERFAHREN ZUM ÜBERGEBEN VON STAPELN VON PRODUKTEN**
HANDLING DEVICE FOR STACKS OF FOLDED PRODUCTS, CORRESPONDING FOLDING MACHINE, AND METHOD FOR TRANSFERRING STACKS OF PRODUCTS
DISPOSITIF DE MANIPULATION DE PILE DE PRODUITS PLIÉS, PLIEUSE CORRESPONDANTE, ET PROCÉDÉ DE TRANSFERT DE PILES DE PRODUITS

(43) Veröffentlichungstag der Anmeldung: 11.11.2020
(73) Patentinhaber: MBO Postpress Solutions GmbH, 71570 Oppenweiler (DE)
(72) Erfinder: König, Sebastian, 71540 Murrhardt (DE); Haug, Olaf, 73663 Berglen (DE); Krawtschuk, Jochen, 71540 Murrhardt (DE)
(74) Vertreter: Wächter, Jochen

(56) Entgegenhaltungen:
- DE-A1- 19 626 802
- IT-A1- LU20 080 017
- US-A1- 2004 240 979
- US-B1- 6 354 793

## Beschreibung

Die vorliegende Erfindung betrifft eine Handhabungsvorrichtung zum Übergeben eines Stapels von Produkten, insbesondere von gefalzten, gehefteten oder gebundenen Produkten, eine Falzmaschine mit einer solchen Handhabungsvorrichtung sowie ein Verfahren zum Übergeben von Stapeln von Produkten.

In vielen Maschinen zur Herstellung oder Verpackung von Produkten werden die Produkte an einem Ausgang der Maschine in Form eines Stapels in einem Auslegebereich der Maschine bereitgestellt, in dem eine Mehrzahl der Produkte übereinander liegt, um die nachfolgende Handhabung, Lagerung und den Transport der Produkte zu vereinfachen. Beispielsweise werden in einer Falzmaschine flächige Medien, wie z.B. Papierbögen, mittels eines oder mehrerer Falzwerke zu Falzprodukten gefaltet. Diese Falzprodukte werden im Anschluss in der Regel mittels einer Stapelvorrichtung zu Stapeln von Falzprodukten gestapelt. Am Ausgang einer Falzmaschine ist daher üblicherweise ein Stapel von Falzprodukten im Auslegebereich der Falzmaschine angeordnet.

Ein Bediener der Maschine hebt diese Stapel von Produkten dann von dem Auslegebereich manuell auf ein Transportmedium, wie z.B. eine Palette, und ordnet eine Vielzahl von aufeinanderfolgenden Stapeln dort nebeneinander an. Umgekehrt müssen die Stapel an einem Zielort zur weiteren Handhabung wieder von dem Transportmedium herunter gehoben werden.

Der Vorgang des Hebens und Anordnens der Stapel von Produkten ist für den Bediener sehr zeitaufwändig und anstrengend. Vor allem bei Produkten, wie z.B. gefalzten, gehefteten oder gebundenen Produkten, die sehr sensitiv im Umgang und somit nicht leicht handzuhaben sind, ist diese Tätigkeit für den Bediener sehr belastend.

Die US 2004/0240979 A1 beschreibt eine Vorrichtung, bei der ein Roboter einen Stapel flacher Produkte ergreift und die Produkte des Stapels während der Übergabe von einer Palette auf eine andere Palette relativ zueinander ausrichtet. Auch in der IT LU20 080 017 A1 ist ein Roboter zur Übergabe flacher Produkte offenbart. Beide aus dem Stand der Technik offenbarten Roboter weisen eine Greifeinrichtung zur Aufnahme des jeweiligen Stapels auf. Diese Greifeinrichtungen umfassen jeweils ein oberes und ein unteres gabelförmiges Halteelement, die an der Oberseite und der Unterseite eines aufgenommenen Stapels anliegen. Die Zinken jedes dieser gabelförmigen Halteelemente sind derart zueinander beabstandet und derart ausgerichtet, dass sie beim Aufnehmen bzw. Ablegen des Stapels in Zwischenräume zwischen den Latten der jeweiligen Palette eindringen können.

Aus der DE 196 26 802 A1 und der US 6,354,793 B1 ist ein Stapelgreifer bekannt, bei dem der Stapel auf einer Auflage angeordnet ist, die durch eine Mehrzahl von ein- und ausfahrbaren Zylindern sowie durch um diese Zylinder geführte Auflagebänder gebildet ist, die einen Stapelaufnahmeraum nach unten begrenzen. Zum Ablegen des Stapels werden die Zylinder eingefahren, wodurch die Auflagebänder an der Unterseite des Stapels abrollen und diesen Stück für Stück freigeben und auf einer Unterlage ablegen.

Es ist daher die Aufgabe der vorliegenden Erfindung, eine Handhabungsvorrichtung sowie ein Verfahren zum Übergeben eines Stapels von Produkten aus einem Aufnahmebereich in einen Ablagebereich bereitzustellen, mittels derer die Übergabe der Stapel einfach, effizient und zuverlässig möglich ist.

Diese Aufgabe wird durch den Gegenstand der unabhängigen Ansprüche 1 und 10 gelöst. Bevorzugte Ausführungsformen sind Gegenstand der Unteransprüche.

Erfindungsgemäß umfasst eine Handhabungsvorrichtung zum Übergeben eines Stapels von Produkten von einem Aufnahmebereich in einen Ablagebereiche eine Greifeinrichtung, die in drei Dimensionen bewegbar ist und die dazu eingerichtet ist, einen im Aufnahmebereich angeordneten Stapel von Produkten aufzunehmen, zu bewegen und im Ablagebereich abzulegen. Die Greifeinrichtung umfasst ein oberes Halteelement zum Niederhalten einer Oberseite des aufgenommenen Stapels und ein unteres Halteelement zum Stützen einer der Oberseite gegenüberliegenden Unterseite des aufgenommenen Stapels.

Auf diese Weise wird eine Handhabungsvorrichtung bereitgestellt, die das Übergeben von Stapeln von Produkten aus dem Aufnahmebereich in den Ablagebereich einfach, effizient und zuverlässig übernimmt. Die Handhabungsvorrichtung ist dabei derart angesteuert und angetrieben, dass sie den zu bewegenden Stapel von einer Aufnahmeposition im Aufnahmebereich in eine vordefinierte Ablageposition im Ablagebereich bewegt. Der Vorgang des Übergebens wird dadurch zumindest teilweise automatisiert und ein Bediener oder Arbeiter wird sowohl zeitlich als auch körperlich entlastet. Da das obere Halteelement die Oberseite des aufgenommenen Stapels niederhält und das untere Halteelement die Unterseite des Stapels stützt, nimmt die Greifeinrichtung den Stapel zuverlässig auf und ein Kippen des Stapels oder ein Verschieben der Produkte des Stapels relativ zueinander während der Aufnahme, der Übergabe und der Ablage werden vermieden. Auch in der Handhabung sensitive gefalzte, geheftete oder gebundene Produktewerden daher zuverlässig übergeben.

Aufgrund des Greifens des Stapels durch das obere und das untere Halteelement eignet sich die Handhabungsvorrichtung besonders gut für solche Produkte, die ein geringes Eigengewicht aufweisen, wodurch der Stapel von Produkten einen geringeren Zusammenhalt aufweist, als dies z.B. bei einem Stapel aus im Vergleich schweren Produkten der Fall ist. Auch Produkte, die flexibel sind und sich daher unter Ausübung von Druck leicht verformen, lassen sich einfach und zuverlässig übergeben. Die Produkte sind daher besonders bevorzugt gefalzte, geheftete oder gebundene Produkte, wie z.B. rückstichdrahtgeheftete Produkte oder klebegebundene Produkte. Es versteht sich, dass die Handhabungsvorrichtung aber auch für alle anderen Produkte verwendet werden kann, die sich auf geeignete Weise stapeln lassen.

Der Aufnahmebereich ist bevorzugt der Auslegebereich einer Maschine, wie z.B. einer Falzmaschine oder einer Druckmaschine, bzw. einer Stapelvorrichtung, die Stapel von Produkten bildet. Der Aufnahmebereich kann aber auch ein Transportmedium sein, auf dem die Stapel von Produkten transportiert oder gelagert werden.

Der Ablagebereich ist der Bereich, in den die Stapel bewegt werden sollen. Im Ablagebereich ist bevorzugt ein Transportmedium, wie z.B. eine Palette angeordnet, auf dem der Stapel von Produkten sowie nachfolgende Stapel von Produkten abgelegt werden. Der Ablagebereich kann aber auch am Eingang einer Fördervorrichtung ausgebildet sein oder ein Bereich sein, in dem der Stapel einer weiteren Verarbeitung, sei es manuell oder maschinell, zugeführt wird.

Die Greifeinrichtung ist in drei Dimensionen bewegbar, bevorzugt in X-, Y- und Z-Richtung eines kartesischen Koordinatensystems in X-, Y- und Z-Richtung. Dadurch wird erreicht, dass die Greifvorrichtung einen im Aufnahmebereich aufgenommenen Stapel zum einen in verschiedenen, zueinander versetzten Ablageposition im Ablagebereich anordnen kann, sowie auch Hindernisse oder Höhenunterschiede zwischen dem Aufnahmebereich und dem Ablagebereich überwinden kann. Die Bewegung der Greifeinrichtung kann dabei linear erfolgen oder durch Überlagerung von Bewegungen auf beliebig gekrümmten Bewegungsbahnen. Hierzu ist die Greifeinrichtung entsprechend an der Handhabungsvorrichtung gelagert, welche wiederum entsprechend angesteuert und angetrieben ist.

Es versteht sich, dass zur Definition der Bewegung der Handhabungsvorrichtung und der Greifeinrichtung bzw. zu deren Steuerung und Antrieb auch jedes andere geeignete Koordinatensystem verwendet werden kann.

Die Greifeinrichtung ist bevorzugt translatorisch und rotatorisch bewegbar. Dabei kann die Greifeinrichtung an der Handhabungsvorrichtung festgelegt sein, sodass keine Relativbewegung zwischen der Greifeinrichtung und der Komponente der Handhabungsvorrichtung möglich ist, an der die Greifeinrichtung angebracht ist. Die Greifeinrichtung kann aber auch translatorisch und/oder rotatorisch relativ zur Handhabungsvorrichtung bewegbar sein. Insbesondere kann die Greifeinrichtung um zumindest eine Achse relativ zu der Komponente der Handhabungsvorrichtung, an der sie angebracht ist, drehbar an der Handhabungsvorrichtung gelagert sein.

Die Greifeinrichtung kann jeweils ein einziges oberes Halteelement und ein einziges unteres Halteelement umfassen, um eine einfache und somit kostengünstige Konstruktion der Greifeinrichtung zu ermöglichen. Die Greifeinrichtung kann aber auch eine Mehrzahl von oberen Halteelement und/oder eine Mehrzahl von unteren Halteelementen umfassen. Alle nachfolgenden Ausführungen treffen daher analog auch auf Ausführungsformen zu, bei denen die Greifeinrichtung eine Mehrzahl von oberen und/oder unteren Halteelementen umfasst.

Um eine noch zuverlässigere Aufnahme des Stapels von Produkten durch die Greifeinrichtung zu gewährleisten, definiert das untere Halteelement in einer Stellung eine Stützebene zur Auflage des Stapels. Ein zu bewegender Stapel ist auf dieser Stützebene der Greifeinrichtung angeordnet, sodass die Produkte des Stapels im Wesentlichen parallel zu dieser Stützebene angeordnet und eben ausgerichtet sind. Während der Aufnahme, der Übergabe und der Ablage des jeweiligen Stapels ist die Handhabungsvorrichtung bevorzugt derart angesteuert und angetrieben, dass die Stützebene im Wesentlichen horizontal ausgerichtet ist. Dadurch wird ein Kippen des Stapels oder ein Verrutschen der Produkte des Stapels vermieden.

Ist nur ein einziges unteres Halteelement vorgesehen, umfasst dieses eine ebene Stützfläche zur Definition der Stützebene. Die Stützfläche tritt in Kontakt mit der Unterseite des zu bewegenden Stapels. Das untere Halteelement kann aber auch eine Mehrzahl von in einer Ebene liegenden Kontaktstellen aufweisen.

Ist eine Mehrzahl von unteren Halteelementen vorgesehen, können die Halteelemente der Mehrzahl von unteren Halteelementen jeweils eine Stützfläche umfassen, die in einer gemeinsamen Ebene angeordnet sind, um die Stützebene zu definieren. Die Halteelemente der Mehrzahl von unteren Haltelementen können jedoch auch jeweils eine andere Form aufweisen, die geeignet ist, die Stützebene zu definieren. Zum Beispiel können zwei untere Halteelemente im Wesentlichen zylindrisch ausgebildet sein und jeweils einen Linienkontakt zur Unterseite des Stapels ausweisen, wobei die Kontaktstellen in einer Ebene liegen und die Stützebene definieren. Drei oder mehr untere Halteelemente können auch nur einen Punktkontakt zur Unterseite des Stapels aufweisen, um die Stützebene zu definieren. Die Halteelemente der Mehrzahl von unteren Halteelementen können alle die gleiche Form aufweisen oder unterschiedlich ausgebildet sein.

Bei der Auslegung der unteren Halteelemente ist die Steifigkeit der Produkte bzw. des Stapels von Produkten zu berücksichtigen, sodass diese zuverlässig aufgenommen werden und nicht z.B. aufgrund ihrer Durchbiegung von dem unteren Halteelement bzw. zwischen einer Mehrzahl von unteren Halteelement herunterfallen. Es ist daher unabhängig von der genauen Ausbildung der Halteelemente bevorzugt, dass zumindest zwei oder vier untere Halteelemente vorgesehen sind, die vorzugsweise zumindest im Bereich von zwei einander gegenüberliegenden Seitenrändern der Unterseite des zu bewegenden Stapels angeordnet sind.

Um die Oberseite des aufgenommenen Stapels möglichst zuverlässig niederzuhalten, ist es bevorzugt, dass das obere Halteelement eine Kontaktebene zum Kontaktieren der Oberseite des Stapels definiert.

Ist nur ein einziges oberes Halteelement vorgesehen, so weist dieses entsprechend eine Kontaktfläche zur Definition der Kontaktebene auf. Alternativ können die Halteelemente einer Mehrzahl von oberen Halteelementen auch jeweils andere Kontaktgeometrien, wie z.B. einen Linienkontakt oder Punktkontakt, zur Oberseite des Stapels aufweisen, um die Kontaktebene zu definieren, wie zuvor bezüglich der Mehrzahl von unteren Halteelementen beschrieben.

Die Kontaktebene ist bevorzugt parallel zur Stützebene ausgerichtet. Dadurch wird sichergestellt, dass ein Stapel von Produkten während der Übergabe eine im Wesentlichen quaderförmige Form beibehält. Unabhängig von der genauen Ausbildung des oberen Halteelements ist es auch hier bevorzugt, wenn zwei oder vier obere Halteelemente im Bereich von zumindest zwei einander gegenüberliegenden Seitenrändern der Oberseite des Stapels von Produkten angeordnet sind, um ein zuverlässiges Niederhalten der Oberseite zu gewährleisten.

In einer bevorzugten Ausführungsform sind das obere und das untere Halteelemente relativ zueinander bewegbar. Dadurch sind das obere und das untere Halteelement zugleich relativ zum aufzunehmenden und zu bewegenden Stapel bewegbar. Dies bietet den Vorteil, dass das obere und das untere Haltelement zunächst beabstandet zum Stapel angeordnet sein können und erst in Richtung des Stapels bewegt werden, wenn dieser zwischen dem oberen und dem unteren Halteelement angeordnet ist. Die Aufnahme des Stapels wird dadurch erleichtert. Zudem kann der Abstand zwischen dem oberen und dem unteren Halteelement einfach an unterschiedliche Stapelhöhen angepasst werden.

Die Relativbewegung zwischen dem oberen und dem unteren Halteelement umfasst bevorzugt eine Bewegungskomponente in Richtung des Stapels bzw. senkrecht zur Stützebene und somit senkrecht zur Ober- bzw. Unterseite des aufzunehmenden Stapels. Das obere und das untere Halteelement können dann in Richtung des Stapels relativ zueinander bewegt werden, um den Abstand zum Stapel zu verringern. Vorzugsweise sind das obere und das untere Halteelement so weit relativ zum Stapel bewegbar, bis das obere Halteelement an der Oberseite des Stapels anliegt und das untere Halteelement an der Unterseite des Stapels anliegt. Eine Relativbewegung zwischen den Halteelementen kann dann dafür sorgen, Luft aus dem Stapel herauszupressen und die Produkte des Stapels dadurch in einer im Wesentlichen ebenen Form anzuordnen, sofern die Produkte ausreichend flexibel sind, wie z.B. bei gefalzten, gehefteten oder gebundenen Produkten.

Es können sowohl das obere Halteelement als auch das untere Halteelement in Richtung des jeweils anderen Halteelements bzw. in Richtung des Stapels bewegbar sein. Es kann aber auch nur das obere oder nur das untere Halteelement bewegbar sein.

Jedes bewegbare Halteelement kann mittels eines Antriebs direkt oder mittels eines gemeinsamen Antriebs über einen entsprechenden Mechanismus indirekt bewegt werden.

Jedes bewegbare Halteelement kann auch mittels geeigneter Vorspannelemente (z.B. Federn) in eine vorbestimmte Position vorgespannt sein oder frei verschiebbar in einer Führung der Greifeinrichtung gelagert sein. Zum Beispiel ist das obere Halteelement in einer Führung senkrecht zur Stützebene frei verschiebbar. Dabei kann alleine die Gewichtskraft des oberen Halteelements eine Verschiebung des Halteelements in Richtung des Stapels bewirken. Das obere Halteelement könnte auch mittels einer Zug- oder Druckfeder in Richtung der Oberseite des Stapels vorgespannt sein. Das untere Halteelement ist bevorzugt antreibbar und kann relativ zum oberen Halteelement verschoben oder geschwenkt werden.

Die Greifeinrichtung umfasst erfindungsgemäß ein erstes seitliches Begrenzungselement und ein zweites seitliches Begrenzungselement, die jeweils einer von zwei einander gegenüberliegenden Seitenflächen eines aufzunehmenden Stapels zuordenbar sind. Die Seitenflächen des Stapels erstrecken sich senkrecht zur Unterseite des Stapels. Das erste und das zweite Begrenzungselement dienen der seitlichen Begrenzung eines Aufnahmebereichs für den Stapel in der Greifeinrichtung. Das erste und das zweite Begrenzungselement eignen sich insbesondere zur Aufnahme und Lagerung des oberen und unteren Halteelements. Alternativ oder zusätzlich können das erste und das zweite seitliche Begrenzungselement auch die jeweilige Seitenfläche des Stapels stützen, der sie zugeordnet sind. Dadurch wird eine noch sicherere und formbeständigere Übergabe des Stapels von Produkten gewährleistet.

Es kann jeweils ein erstes und ein zweites seitliches Begrenzungselement vorgesehen sein. Optional kann eine Mehrzahl von ersten und/oder eine Mehrzahl von zweiten Begrenzungselementen vorgesehen sein. Die nachfolgenden Ausführungen sind daher analog auf Ausführungsformen mit einer beliebigen Anzahl von ersten und zweiten Begrenzungselementen übertragbar.

Um eine optimale Ausrichtung des Stapels zu erreichen, definiert das erste Begrenzungselement vorzugsweise eine erste Begrenzungsebene und das zweite Begrenzungselement definiert vorzugsweise eine zweite Begrenzungsebene zur Anlage an jeweils einer von zwei einander gegenüberliegenden Seitenflächen des aufzunehmenden Stapels. Die erste und die zweite Begrenzungsebene sind parallel zueinander sowie jeweils senkrecht zur Stützebene ausgerichtet.

Umfasst die Greifeinrichtung jeweils nur ein erstes und ein zweites Begrenzungselement, umfassen diese bevorzugt jeweils eine Begrenzungsfläche oder eine Mehrzahl von Kontaktstellen zur Definition der Begrenzungsebenen. Begrenzungselemente einer Mehrzahl von Begrenzungselementen können auch eine andere Kontaktgeometrie (z.B. Linienkontakt oder Kontaktpunkt) zu den Seitenflächen des aufzunehmenden Stapels aufweisen, um eine Begrenzungsebene zu definieren, wie eingangs bezüglich des unteren Halteelements und der Stützebene beschrieben ist.

Eine einfache Aufnahme eines Stapels mittels der Greifeinrichtung wird erreicht, wenn das erste und das zweite Begrenzungselement gemäß einer besonders bevorzugten Ausführungsform relativ zueinander bewegbar sind. Insbesondere können das erste und das zweite Begrenzungselement aufeinander zu bewegbar sein. Die Relativbewegung des ersten und des zweiten Begrenzungselement umfasst daher eine Bewegungskomponente, die parallel zur Stützebene bzw. senkrecht zu den Begrenzungsebenen und den einander gegenüberliegenden Seitenflächen des Stapels, denen die Begrenzungselemente jeweils zuordenbar sind, ausgerichtet ist. Dadurch kann der Stapel von Produkten zwischen dem ersten und dem zweiten Begrenzungselement sowie zwischen dem oberen und dem unteren Halteelement angeordnet werden, wobei das erste und das zweite Begrenzungselement währenddessen einen gewissen Abstand zur jeweiligen Seitenfläche des Stapels aufweisen, wodurch eine Kollision der Greifeinrichtung mit dem Stapel verhindert wird. Das erste und das zweite Begrenzungselement werden erst anschließend in Richtung der zwei einander gegenüberliegenden Seitenflächen des Stapels zugestellt, vorzugsweise bis sie die jeweilige Seitenfläche berühren, der sie zugeordnet sind.

Bevorzugt werden das erste und das zweite Begrenzungselement mittels jeweils eines eigenen Antriebs direkt oder mittels eines gemeinsamen Antriebs und eines geeigneten Mechanismus mittelbar angetrieben.

Die Relativbewegung zwischen dem ersten und dem zweiten Begrenzungselement kann besonders einfach umgesetzt werden, wenn die Greifeinrichtung gemäß einer bevorzugten Ausführungsform einen Träger umfasst und zumindest eines aus erstem und zweitem Begrenzungselement linear verschiebbar an dem Träger gelagert ist. Es versteht sich, dass eines der beiden Begrenzungselemente feststehend ausgebildet sein kann und nur das jeweils andere Begrenzungselement linear verschiebbar sein kann. Alternativ können das erste und das zweite Begrenzungselement linear verschiebbar am Träger gelagert sein, wobei die Bewegung der Begrenzungselemente vorzugsweise synchron erfolgt.

Zum Beispiel kann der Träger zumindest eine entsprechende Linearführung aufweisen, mit der ein entsprechendes Gegenstück an dem zumindest einen linear verschiebbaren Begrenzungselement in Eingriff steht. Die Linearbewegung des linear verschiebbaren Begrenzungselements kann durch geeignete Antriebe, wie z.B. einen Linearantrieb, einen Spindelantrieb oder einen hydraulischen oder pneumatischen Antrieb, z.B. mittels geeigneter Zylinder, erfolgen. Es kann aber auch ein entsprechender Mechanismus zur Bewegung des ersten und des zweiten Begrenzungselements relativ zueinander vorgesehen sein, wie insbesondere aus der nachfolgenden Figurenbeschreibung hervorgeht.

Es ist besonders bevorzugt, wenn das obere und das untere Halteelement am ersten und/oder zweiten Begrenzungselement gelagert bzw. angebracht sind. Dadurch ergibt sich ein einfacher Aufbau der Greifeinrichtung mit einer geringen Anzahl von Komponenten. Ist jeweils nur ein oberes bzw. ein unteres Halteelement vorgesehen, so kann dieses jeweils am ersten oder am zweiten Begrenzungselement gelagert sein oder es kann sich vom ersten Begrenzungselement zum zweiten Begrenzungselement erstrecken und an beiden Begrenzungselementen eingelagert sein. Ist eine Mehrzahl von oberen bzw. unteren Halteelementen vorgesehen, ist es bevorzugt, dass ein Teil der Mehrzahl von oberen bzw. unteren Halteelementen am ersten Begrenzungselement gelagert ist und der jeweils andere Teil der Mehrzahl von oberen bzw. unteren Halteelementen am zweiten Begrenzungselement gelagert ist. Die Halteelemente der Mehrzahl von oberen bzw. unteren Halteelementen können dann symmetrisch zu einer Mittelebene angeordnet sein, die zwischen dem ersten und dem zweiten Begrenzungselement senkrecht zur Stützebene definiert ist. Alternativ können die jeweiligen Halteelemente auch asymmetrisch und zu dieser Mittelebene angeordnet sein.

Sind das obere und das untere Halteelement relativ zueinander bewegbar, ist es weiterhin bevorzugt, dass zumindest das bewegbare Halteelement entlang zumindest eines aus erstem und zweitem Begrenzungselement linear verschiebbar gelagert ist. Hierzu kann das zumindest eine aus erstem und zweitem Begrenzungselement eine Führung umfassen, die mit einem entsprechenden Gegenstück am jeweiligen Halteelement zusammenwirkt, sodass das Halteelement entlang der Führung verschiebbar ist. Eine Längsrichtung der Führung ist bevorzugt senkrecht zur Stützebene ausgebildet, um eine lineare Verschiebbarkeit des Halteelements in Richtung des Stapels zu ermöglichen.

Die Führungen für das obere und untere Halteelement können als eine gemeinsame Führung ausgebildet sein, falls sowohl das obere als auch das untere Halteelement linear verschiebbar am ersten und/oder zweiten Begrenzungselement gelagert sind. Die zumindest eine Führung des unteren Halteelement kann aber auch eine andere sein als die zumindest eine Führung des oberen Halteelements.

Erfindungsgemäß ist das untere Halteelement bezüglich zumindest eines aus erstem und zweitem Begrenzungselement schwenkbar gelagert. Hierzu ist zwischen dem unteren Halteelement und dem jeweiligen Begrenzungselement ein Drehgelenk vorgesehen, das eine Drehachse definiert, um die das untere Halteelement schwenkbar ist.

In einer Ausführungsform kann das untere Halteelement sowohl entlang zumindest eines aus erstem und zweitem Begrenzungselement linear verschiebbar gelagert sein und bezüglich dieses Begrenzungselements schwenkbar gelagert sein. Hierzu ist das untere Begrenzungselement bevorzugt mehrteilig ausgebildet ist, wobei die einzelnen Abschnitte gelenkig miteinander verbunden sind. Dadurch wird ein unteres Halteelement bereitgestellt, das besonders stabil eine Stützebene definiert und zugleich einfach bewegbar und platzsparend anordenbar ist. Zudem gewährleistet dieser Mechanismus ein sanftes Absetzen des Stapels im Ablagebereich.

In einer besonders bevorzugten Ausführungsform umfasst die Handhabungsvorrichtung weiterhin einen Roboter, insbesondere einen Portalroboter oder Knickarmroboter. Auf diese Weise kann die Greifeinrichtung besonders einfach und vielfältig in drei Dimensionen bewegt werden, wodurch das Ablegen von Stapeln von Produkten in einer Vielzahl unterschiedlicher Ablagepositionen im Ablagebereich sowie in einer Mehrzahl von unterschiedlichen Ausrichtungen zueinander möglich ist.

Der Roboter umfasst bevorzugt einen Roboterarm mit einem freien Ende, wobei die Greifeinrichtung an dem freien Ende des Roboterarms angeordnet ist. Dabei kann die Greifeinrichtung starr mit dem Roboterarm verbunden sein. Bevorzugt ist die Greifeinrichtung jedoch gelenkig mit dem Roboterarm verbunden und zumindest um eine Drehachse relativ zum Roboterarm drehbar, die sich senkrecht zur Oberseite und zur Unterseite eines aufgenommenen Stapels bzw. zur Stützebene erstreckt. Es können auch andere Gelenkverbindungen vorgesehen sein, die ein beliebiges Schwenken der Greifeinrichtung relativ zum Roboterarm ermöglichen.

Der Roboter ist vorzugsweise als kollaborierender Roboter ausgebildet, sodass eine optimale Zusammenarbeit zwischen einem Bediener und dem Roboter möglich ist und zusätzliche Schutzvorrichtungen, wie z.B. Zäune um den Roboter, nicht erforderlich sind, die den Arbeitsbereich des Bedieners einschränken würden. Dennoch wird zugleich die Sicherheit des Bedieners sichergestellt, der sich im Umfeld des Roboters aufhält.

Vorzugsweise ist eine Steuereinrichtung zum Steuern des Roboters vorgesehen. Die Steuereinrichtung kann eine Benutzeroberfläche zur Eingabe von Steuerbefehlen durch den Bediener aufweisen. Die Steuereinrichtung des Roboters kann ferner mit der Steuereinrichtung der Maschine gekoppelt sein oder in diese integriert sein, um eine optimale Abstimmung zwischen dem Roboter und der Maschine zu ermöglichen.

Ferner kann der Roboter durch den Bediener ferngesteuert sein, oder das Übergeben eines Stapels von Produkten teilautomatisch oder vollautomatisch (autonom) übernehmen. Hierzu ist der Roboter bzw. die Handhabungsvorrichtung entsprechend eingerichtet und durch die Steuereinrichtung angesteuert.

Die Handhabungsvorrichtung lässt sich besonders vorteilhaft zusammen mit einer Falzmaschine nutzen, wobei die gestapelten Produkte gefalzte Produkte sind. Eine Falzmaschine gemäß der vorliegenden Erfindung umfasst deshalb entlang einer Durchlaufrichtung hintereinander angeordnet mindestens ein Falzwerk zum Falten von flächigen Medien zu Falzprodukten, eine Stapelvorrichtung zum Bilden eines Stapels von Falzprodukten aus den Falzprodukten; einen Auslegebereich zum Auslegen des Stapels von Falzprodukten, der einen Aufnahmebereich bildet, einen der Falzmaschine zugeordneten Ablagebereich sowie die Handhabungsvorrichtung zum Übergeben des Stapels vom Auslegebereich in den der Falzmaschine zugeordneten Ablagebereich.

Auf diese Weise lassen sich die zuvor beschriebenen Vorteile der Handhabungsvorrichtung unmittelbar an der Falzmaschine umsetzen und kommen dem Bediener der Falzmaschine zugute.

Vorzugsweise umfasst die Falzmaschine in der Durchlaufrichtung vor dem mindestens einen Falzwerk weiterhin eine Zuführung. Die Zuführung kann durch einen Anleger, z.B. ein Palettenanleger, gebildet sein. Die Zuführung kann aber auch direkt aus einer der Falzmaschine vorangehenden Maschine, wie z.B. einer Druckmaschine, erfolgen.

Ein erfindungsgemäßes Verfahren zum Übergeben von Stapeln von Produkten, insbesondere von gefalzten, gehefteten oder gebundenen Produkte, von einem Aufnahmebereich in einen Ablagebereich umfasst die Schritte:
a) Anordnen eines Stapels von Produkten und einer Greifeinrichtung relativ zueinander im Aufnahmebereich, wobei der Stapel durch eine Mehrzahl aufeinanderliegender Produkte gebildet ist, von denen das unterste Produkt flächig im Aufnahmebereich aufliegt;
b) Aufnehmen des im Aufnahmebereich angeordneten Stapels mittels der Greifeinrichtung;
c) Anheben des aufgenommen Stapels und Bewegen des Stapels aus dem Aufnahmegebereich in den Ablagebereich mittels der Greifeinrichtung;
d) Ablegen des bewegten Stapels im Ablagebereich;
e) Wiederholen der Schritte a) bis d) für zumindest einen weiteren Stapel.

Auf diese Weise wird ein Verfahren bereitgestellt, dass das Übergeben von Stapeln von Produkten aus einem Aufnahmebereich in einen Ablagebereich erleichtert, effizient und zuverlässig gestaltet und einen Bediener der Maschine entlastet.

Bevorzugt wird das Verfahren mittels der zuvor beschriebenen Handhabungsvorrichtung ausgeführt. Entsprechend sind alle Merkmale, Eigenschaften und Vorteile der Handhabungsvorrichtung auf das Verfahren übertragbar.

Der Stapel von Produkten im Aufnahmebereich ist derart gebildet, dass die Produkte parallel zu einer Ebene liegen, die durch eine Auflagefläche des Aufnahmebereichs definiert ist. Die Produkte liegen derart übereinander, dass nur das unterste Produkt des Stapels im Aufnahmebereich aufliegt. Die Produkte liegen im Wesentlichen flächig aufeinander. Abweichungen können sich durch die Ausbauchung der Produkte ergeben. Sind die Produkte vorzugsweise als gefalzte, geheftete oder gebundene Produkte ausgebildet, bilden Rücken der Produkte eine Seitenfläche des Stapels, die im Wesentlichen senkrecht zur Unterseite des Stapels angeordnet ist. Eine Umlenkung der Produkte vor dem Stapeln, sodass diese aufrecht stehen, ist in diesem Fall nicht notwendig. Zudem weist der so gebildete Stapel von Produkten eine gewisse Stabilität auf, um möglichst selbstständig zu stehen, ohne zu kippen.

Im Ablagebereich ist bevorzugt ein Transportmedium, wie z.B. eine Palette angeordnet, auf dem der Stapel von Produkten sowie nachfolgende Stapel von Produkten abgelegt werden. Der Ablagebereich kann aber auch am Eingang einer Fördervorrichtung ausgebildet oder ein Bereich sein, in dem der Stapel einer weiteren Verarbeitung, sei es manuell oder maschinell, zugeführt wird.

Die aufeinanderfolgenden Stapel von Produkten werden im Ablagebereich in einem vorbestimmten Muster abgelegt, in dem die Stapel versetzt zueinander in einer Ebene angeordnet sind.

Sind die Produkte als gefalzte, geheftete oder gebundene Produkte ausgebildet, ist es bevorzugt, dass sich gemäß des vorbestimmten Musters zwei Stapel im Ablagebereich derart gegenüberliegen, dass die durch die Rücken der Produkte gebildeten Seitenflächen beider Stapel voneinander abgewandt sind. D.h., dass die den Rücken gegenüberliegenden Seitenflächen beider Stapel einander zugewandt sind. Weitere Stapel können auch derart angeordnet werden, dass die den Rücken gegenüberliegende Seitenfläche des jeweiligen Stapels einem weiteren Stapel zugewandt ist.

Diese Anordnung führt dazu, dass keine Produkte aus dem Ablagebereich bzw. - falls vorhanden - von einem Transportmedium fallen können, selbst wenn ein dort angeordneter Stapel von Produkten umkippt. Dies liegt darin begründet, dass die Stapel aufgrund eines Rückenauftrags der Produkte im Bereich der Rücken der Produkte eine größere Dicke aufweisen, als auf der gegenüberliegenden Seite. Der Rückenauftrag kann z.B. durch den Produkten innewohnende Rückstellkräfte und die Materialanhäufung im Bereich eines Falzes oder durch Spiralen oder Klebstoff gehefteter oder gebundener Produkte entstehen. Stapel, bei denen die Produkte aufeinander liegen, weisen daher auf der durch die Rücken gebildeten Seitenfläche eine größere Höhe auf, als auf der gegenüberliegenden Seitenfläche. Dadurch ergibt sich eine Neigung der Produkte, die von der durch die Rücken gebildeten Seitenfläche in Richtung der gegenüberliegenden Seitenfläche abfällt und die mit steigender Anzahl von Produkten zunimmt. Es besteht daher die Gefahr, dass obere Produkte in Richtung der den Rücken gegenüberliegenden Seitenfläche vom Stapel rutschen. Ist dort zumindest ein weiterer Stapel angeordnet, werden die rutschenden Produkte aufgehalten und es wird vermieden, dass sie aus dem Ablagebereich und ggf. vom Transportmedium fallen.

Unabhängig von der Anordnung der Stapel in einem bestimmten Muster und davon, ob ein Transportmedium im Ablagebereich angeordnet ist, werden aufeinanderfolgende Stapel von Produkten im Ablagebereich beabstandet zueinander angeordnet. Ist eine vorbestimmte Anzahl von Stapeln von Produkten im Ablagebereich angeordnet, bilden diese eine erste Lage von Stapeln und es ist denkbar, dass auf diese erste Lage von Stapeln eine zweite Lage von Stapeln abgelegt wird. Zwischen den Lagen von Stapeln kann ein Trennelement vorgesehen sein.

Der Schritt a) des Anordnens des Stapels und der Greifeinrichtung erfolgt erfindungsgemäß derart, dass zwei einander gegenüberliegende Seitenflächen des Stapels von Produkten zwischen einem ersten und einem zweiten seitlichen Begrenzungselement der Greifeinrichtung angeordnet sind und eine Oberseite und eine Unterseite des Stapels zwischen einem oberen Halteelement und einem unteren Halteelement der Greifeinrichtung angeordnet sind.

Vorzugsweise ist der Stapel von Produkten währenddessen stationär im Ablagebereich der Maschine angeordnet. Entsprechend wird die Greifeinrichtung relativ zum Stapel positioniert. Um ein einfaches Positionieren der Greifeinrichtung zu ermöglichen, weisen das erste und das zweite Begrenzungselement während des Anordnens der Greifeinrichtung einen gewissen Abstand zu den zwei gegenüberliegenden Seitenflächen des Stapels auf, um eine Kollision mit dem Stapel zu vermeiden.

Auch das obere und das untere Halteelement weisen bevorzugt einen gewissen Abstand zur Oberseite bzw. zur Unterseite des Stapels auf, um eine Kollision mit dem Stapel zu vermeiden. Dass die Oberseite und die Unterseite des Stapels zwischen dem oberen und dem unteren Halteelement angeordnet sind, bedeutet, dass sich das obere Halteelement oberhalb einer durch die Oberseite des Stapels definierten Ebene und das untere Halteelement unterhalb einer durch die Unterseite des Stapels definierten Ebene befindet. Aufgrund des Abstands der Begrenzungselemente zu den Seitenflächen während des Schritts a) kann es sein, dass sich das obere Halteelement nicht unmittelbar über der Oberseite des Stapels, sondern auch seitlich versetzt zur Oberseite befindet, und dass sich das untere Halteelement nicht unmittelbar unter der Unterseite des Stapels, sondern auch seitlich versetzt zur Unterseite des Stapels befindet. Sollte der Stapel nicht im Wesentlichen quaderförmig sein und die Oberseite oder die Unterseite schräg bezüglich einer horizontalen Ebene angeordnet sein, beschränkt sich diese Betrachtung auf die nähere Umgebung des Stapels, in der die Greifeinrichtung und die Halteelemente angeordnet sind

Erfindungsgemäß befindet sich das untere Halteelement während des Schritts a) in einer Stellung, in der es im Wesentlichen nicht in einen Zwischenraum zwischen dem ersten und dem zweiten seitlichen Begrenzungselement hineinragt. Dadurch wird die Anordnung der Greifeinrichtung relativ zum Stapel vereinfacht, da eine Kollision des unteren Halteelements mit dem Stapel nicht zu befürchten ist.

Erfindungsgemäß umfasst Schritt b) des Verfahrens das Bewegen des unteren Halteelements aus der ersten Stellung in eine zweite Stellung, in der das untere Halteelement in den Zwischenraum zwischen dem ersten und dem zweiten seitlichen Begrenzungselement hineinragt und den Zwischenraum nach unten begrenzt, um eine Aufnahme für den Stapel zu bilden. In der zweiten Stellung definiert das untere Halteelement die Stützebene für den Stapel. Das Bewegen des unteren Halteelements aus der ersten in die zweite Stellung kann eine lineare Bewegung, eine rotatorische Bewegung oder eine Kombination daraus umfassen.

Das Bewegen des unteren Halteelements in die zweite Stellung kann erfolgen, sobald das untere Halteelement unterhalb der durch die Unterseite des Stapels definierten Ebene angeordnet ist. Die Begrenzungselemente können dann zuverlässig von oben neben den Seitenflächen des Stapels angeordnet werden, ohne eine Kollision des unteren Halteelements mit dem Stapel zu riskieren.

Gemäß einer bevorzugten Ausführungsform des Verfahrens umfasst der Schritt d) des Ablegens des bewegten Stapels weiterhin:
- Bewegen des unteren Halteelements aus der zweiten Stellung in die erste Stellung und dadurch Freigeben des Stapels nach unten;
- Mitführen des oberen Halteelements mit der Oberseite des Stapels während des Ablegens, bis die Unterseite des Stapels im Ablagebereich aufliegt.

Dadurch wird gewährleistet, dass das obere Halteelement das oberste Produkt niederhält, bis der Stapel abgelegt ist, wodurch ein Verrutschen der Produkte des Stapels während des Ablegens verhindert wird. Dies ist insbesondere dann von Vorteil, wenn die Unterseite des Stapels vorrichtungsbedingt untermittelbar vor dem Bewegen des unteren Halteelements aus der zweiten Stellung in die erste Stellung noch nicht im Ablagebereich aufliegt und der Stapel nach dem Freigeben des Stapels nach unten rutscht.

Es ist in der Regel wünschenswert, dass im Ablagebereich ein Transportmedium, wie z.B. eine Palette, vorgesehen ist. Transportmedien weisen üblicherweise eine standardisierte Form auf, die nicht auf die Konstruktion der Greifeinrichtung abgestimmt ist. Es wird daher oft nicht möglich sein, die Stapel von Produkten mittels der Greifeinrichtung im Ablagebereich derart abzulegen, dass die Unterseite des Stapels bereits im Ablagebereich aufliegt, während das untere Halteelement noch unter der Unterseite des Stapels angeordnet ist. Es ist daher bevorzugt, dass sich das untere Halteelement aus der zweiten in die erste Stellung bewegt, dadurch den Stapel freigibt und der Stapel die verbleibende Distanz zur Auflagefläche im Ablagebereich nach unten rutscht. Dabei ist der Stapel vorzugsweise durch das erste und das zweite seitliche Begrenzungselement geführt und das obere Halteelement wird mitgeführt, um den Zusammenhalt des Stapels zu gewährleisten.

Schließlich umfasst der Schritt b) des Aufnehmens des Stapels von Produkten vorzugsweise weiterhin:
b1) Bewegen zumindest eines aus erstem und zweitem Begrenzungselement in Richtung einer diesem Begrenzungselement zugewandten Seitenfläche des Stapels, und
b2) vorzugsweise Bewegen zumindest eines aus oberem und unterem Halteelement relativ zu einer diesem Halteelement zugewandten Oberseite oder Unterseite des Stapels, die sich senkrecht zu den Seitenflächen des Stapels erstrecken.

Es ist dabei bevorzugt, dass die Greifeinrichtung während des Schritts a) derart angeordnet wird, dass das obere Halteelement, das untere Halteelement, das erste Begrenzungselement und das zweite Begrenzungselement jeweils beabstandet zum Stapel angeordnet sind, und im Anschluss das erste und das zweite Begrenzungselement in Richtung des Stapels bewegt werden, vorzugsweise, bis sie die einander gegenüberliegenden Seitenflächen berühren, denen die Begrenzungselemente zugeordnet sind. Anschließend können das obere und das untere Halteelement relativ zum Stapel bewegt werden. Hierzu kann es ausreichen, dass sich das untere Halteelement in die zweite Stellung bewegt oder sich bereits in der zweiten Stellung befindet und die Greifeinrichtung nach oben bewegt wird, bis das untere Halteelement die Unterseite des Stapels berührt.

Gemäß einer besonders bevorzugten Ausführungsform wird die Greifeinrichtung zunächst derart angeordnet, dass zwei einander gegenüberliegende Seitenflächen des Stapels von Produkten zwischen dem ersten und dem zweiten seitlichen Begrenzungselement der Greifeinrichtung aber beabstandet zu diesen angeordnet sind, und eine Oberseite und eine Unterseite des Stapels zwischen dem oberen Halteelement und dem unteren Halteelement der Greifeinrichtung beabstandet zu diesen angeordnet sind, wobei sich das untere Halteelement in der ersten Stellung befindet. Anschließend werden das erste und das zweite Begrenzungselement in Richtung der gegenüberliegenden Seitenflächen des Stapels bewegt, bis das erste und das zweite Begrenzungselement an der jeweiligen Seitenfläche anliegen. Vor, während oder nach dem Bewegen des ersten und des zweiten Begrenzungselements wird das untere Halteelement in die zweite Stellung bewegt. Anschließend wird die Greifeinrichtung zumindest so weit senkrecht zu Unterseite des Stapels und somit zur Stützebene nach oben bewegt, bis der Stapel mit seiner Unterseite auf dem unteren Halteelement aufliegt.

Das obere Halteelement wird relativ zum Stapel nach unten bewegt, bis es auf der Oberseite des Stapels aufliegt. Beispielsweise kann das obere Halteelement aufgrund seiner Gewichtskraft nach unten rutschen, sodass es auf der Oberseite des Stapels aufliegt. Das obere Halteelement kann aber auch feststehend angeordnet sein, wobei dann in der Regel ein geringer Abstand z.B. von wenigen Millimetern zwischen der Oberseite des Stapels und dem oberen Halteelement vorhanden ist, der so gering ist, dass ein oberes Produkt des Stapels nicht herunterkippen kann.

Weitere Merkmale und Vorteile der vorliegenden Erfindung ergeben sich aus der nachfolgenden Beschreibung unter Bezugnahme auf die Zeichnungen.
- Fig. 1: zeigt eine Ausführungsform einer Falzmaschine mit einer erfindungsgemäßen Handhabungsvorrichtung schematisch in einer perspektivischen Ansicht.
- Fig. 2: zeigt eine Ausführungsform einer Greifeinrichtung der erfindungsgemäßen Handhabungsvorrichtung in einer perspektivischen Ansicht.
- Fig. 3: zeigt die Greifeinrichtung nach Fig. 2 in einer Vorderansicht.
- Fig. 4: zeigt die Greifeinrichtung nach Fig. 2 in einer Seitenansicht.
- Fig. 5: zeigt die Greifeinrichtung nach Fig. 2 in einer Unteransicht.
- Fig. 6a-6g: zeigen die Greifeinrichtung nach Fig. 2 in einer Vorderansicht in verschiedenen Zuständen während des erfindungsgemäßen Verfahrens.
- Fig. 7a, b: zeigen jeweils schematisch ein Muster zur Ablage von Stapeln gemäß des erfindungsgemäßen Verfahrens in einer Draufsicht.

Aufgrund der besonderen Eignung der erfindungsgemäßen Vorrichtung für Stapel von gefalzten, gehefteten oder gebundenen Produkten wird die Erfindung nachfolgend anhand einer Falzmaschine und eines Stapels von Falzprodukten beschrieben. Es versteht sich, dass die in diesem Zusammenhang beschriebenen Merkmale und Vorteile im Wesentlichen auch auf alle anderen Maschinen und Produkte, sowie auf die Übergabe eines Stapels aus einem anderen Aufnahmebereich in einen anderen Ablagebereich im Rahmen der Erfindung übertragbar sind.

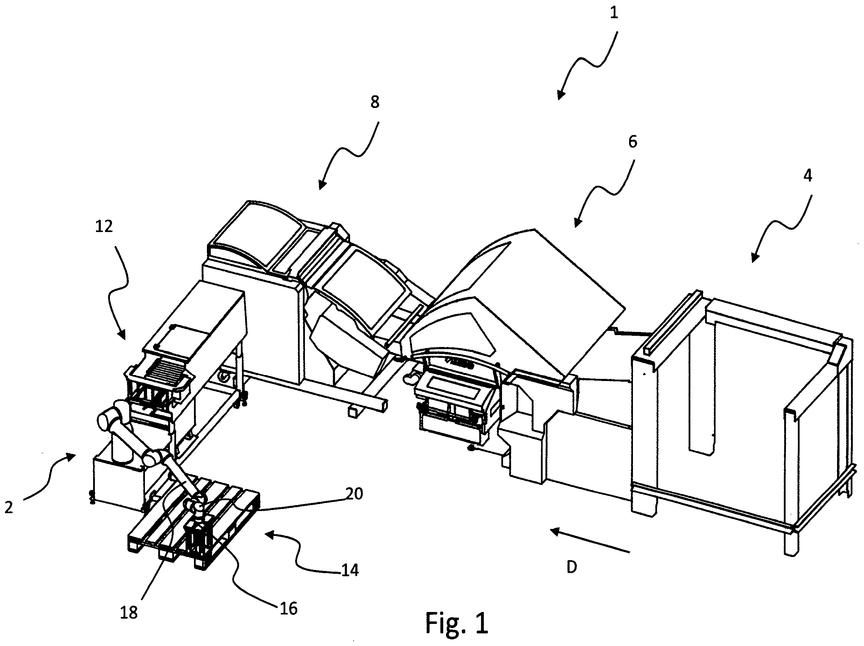

Fig. 1 zeigt schematisch eine Falzmaschine 1 mit einer erfindungsgemäßen Handhabungsvorrichtung 2. An einer Zuführung 4 werden der Falzmaschine 1 flächige Medien, z. B. Papierbögen, bereitgestellt und zugeführt. Die Zuführung 4 kann einen Anleger, z. B. einen Palettenanleger, umfassen oder direkt mittels geeigneter Fördermittel mit einer vorangehenden Verarbeitungsmaschine, z. B. einer Druckmaschine, verbunden sein.

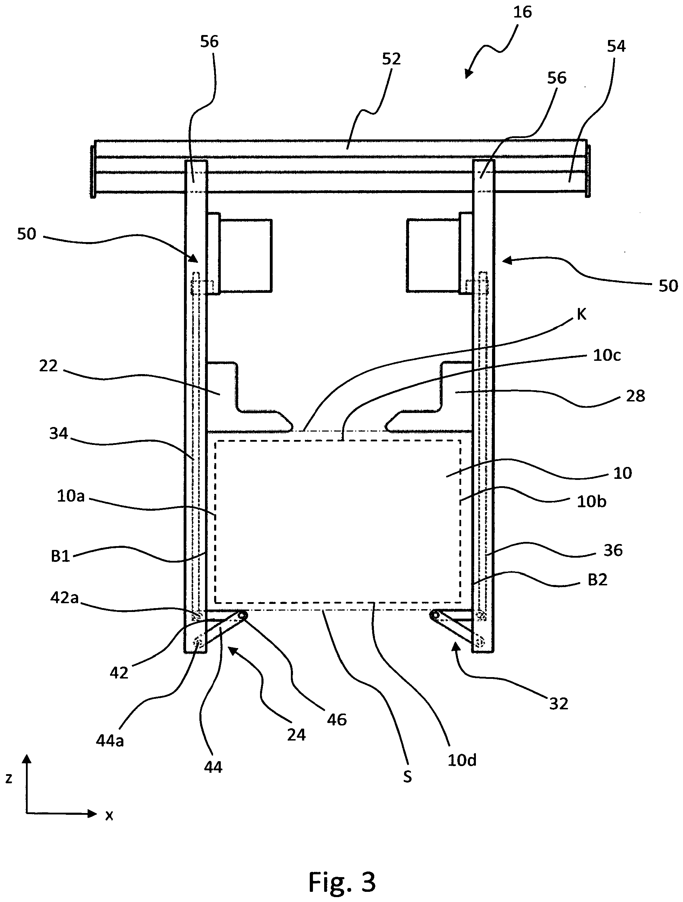

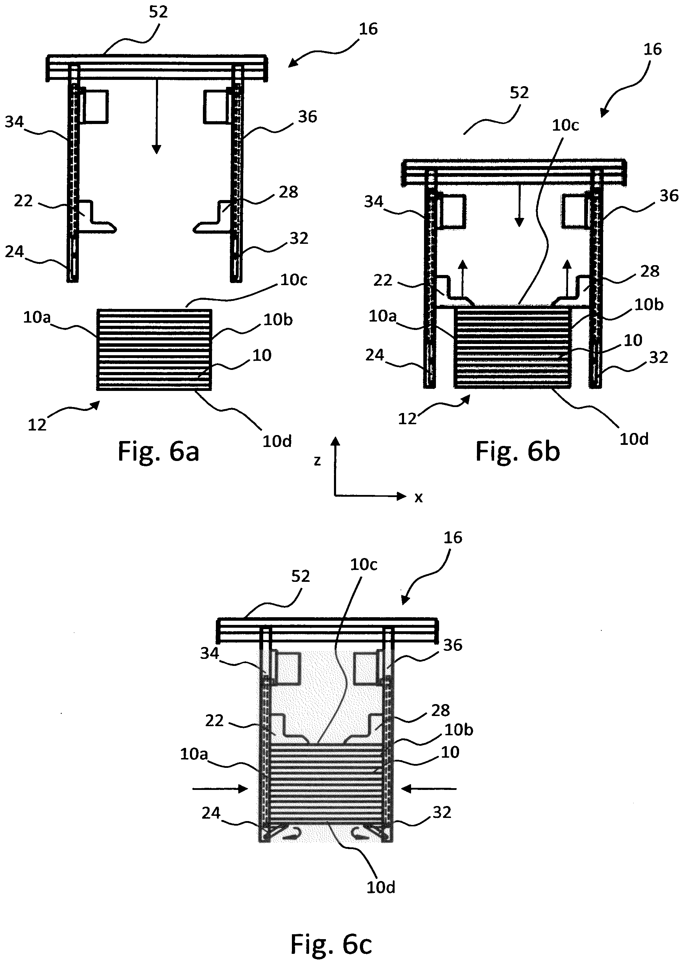

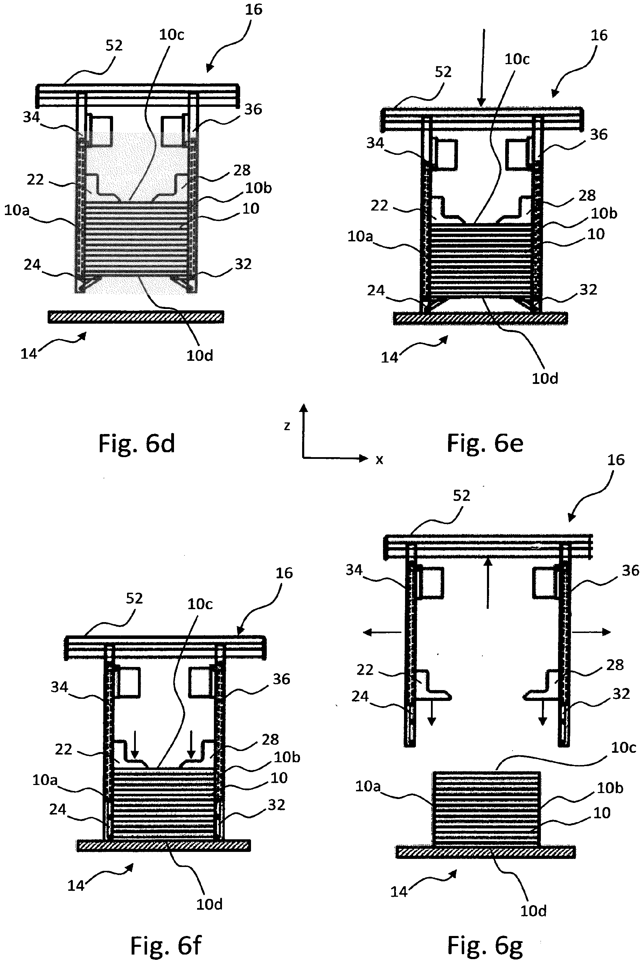

Die Falzmaschine 1 umfasst ferner entlang einer Durchlaufrichtung D hintereinander angeordnet mindestens ein Falzwerk 6 zum Falten der flächigen Medien zu Falzprodukten, eine Stapelvorrichtung 8 zum Bilden eines Stapels 10 von Falzprodukten (s. Fig. 3 und Fig. 6) aus den Falzprodukten, und einen Auslegebereich 12 zum Auslegen des Stapels von Falzprodukten, der im Allgemeinen einem Aufnahmebereich 12 entspricht. Ein im Auslegebereich 12 der Falzmaschine 1 angeordneter Stapel 10 von Falzprodukten ist dann in einem der Falzmaschine 1 zugeordneten Ablagebereich 14 anzuordnen. Hierzu ist die Handhabungsvorrichtung 2 vorgesehen. Im Ablagebereich 14 ist vorzugsweise ein Transportmedium, wie z.B. eine Palette, angeordnet, auf dem die Stapel 10 abgelegt werden.

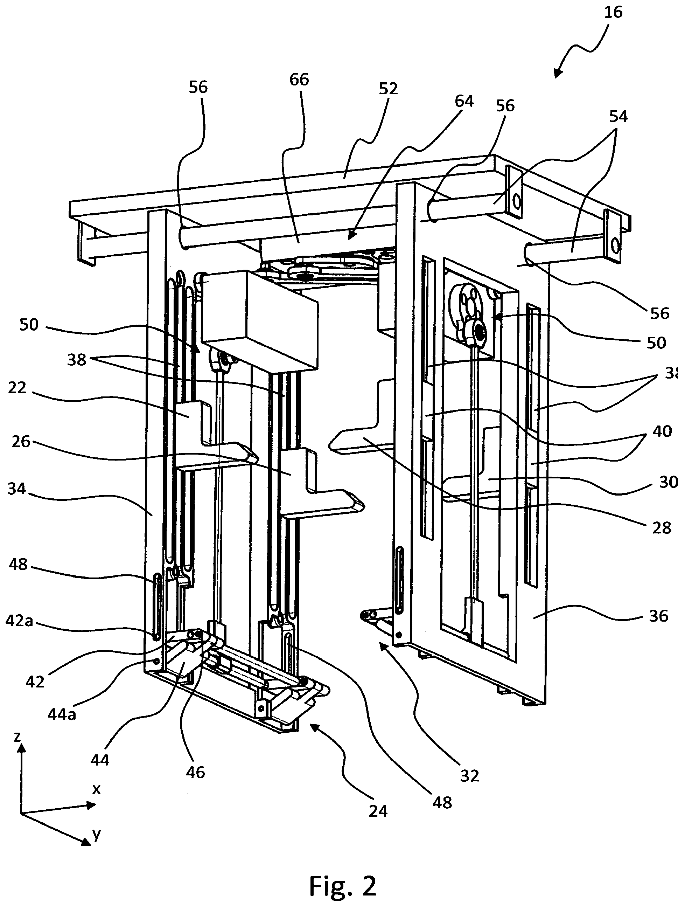

Die Handhabungsvorrichtung 2 zum Übergeben des Stapels 10 von Falzprodukten vom Auslegebereich 12 der Falzmaschine 1 in den der Falzmaschine 1 zugeordneten Ablagebereich 14 umfasst eine Greifeinrichtung 16. Die Greifeinrichtung 16 ist in drei Dimensionen bewegbar und dazu eingerichtet, einen im Auslegebereich 12 angeordneten Stapel 10 von Falzprodukten aufzunehmen und im Ablagebereich 14 abzulegen. Details der Greifeinrichtung 16 ergeben sich aus der nachfolgenden Beschreibung unter Bezugnahme auf die Fig. 2 bis 6. Es versteht sich, dass die Handhabungsvorrichtung 2 im Wesentlichen unabhängig von der Falzmaschine 1 ausgebildet ist, solange sich der Auslegebereich 12 und der Ablagebereich 14 in Reichweite der Handhabungsvorrichtung 2 befinden.

Die Handhabungsvorrichtung 2 ist vorzugsweise als Roboter, insbesondere als ein Portalroboter oder, wie dargestellt, als Knickarmroboter ausgebildet. Der Roboter umfasst einen Roboterarm 18 mit einem freien Ende 20, an dem die Greifeinrichtung 16 angeordnet ist. Die Greifeinrichtung 16 ist mittels einer Verbindungseinrichtung mit dem Roboterarm 18 verbunden, wobei die Verbindungseinrichtung eine starre Verbindung zwischen der Greifeinrichtung 16 und dem Roboterarm herstellen kann, oder einen beliebigen Freiheitsgrad der Greifeinrichtung relativ zum Roboterarm 18 ermöglichen kann.

Die Fig. 2 und 3 zeigen eine Ausführungsform der Greifeinrichtung 16 zum Aufnehmen, Bewegen und Ablegen eines Stapels 10 von Falzprodukten, der in Fig. 3 gestrichelt angedeutet ist. Es versteht sich, dass die Greifeinrichtung 16 mit jeder geeigneten Handhabungsvorrichtung 2 verwendet werden kann und nicht auf eine Verwendung mit einem Roboter gemäß Fig. 1 beschränkt ist.

Der Stapel 10 ist im Wesentlichen quaderförmig und umfasst zwei einander gegenüberliegende Seitenflächen, nämlich eine linke Seitenfläche 10a und eine rechte Seitenfläche 10b, sowie eine Oberseite 10c und eine der Oberseite 10c gegenüberliegende Unterseite 10d. Die zwei weiteren Seitenflächen, die senkrecht zur linken und rechten Seitenfläche 10a, 10b und zur Ober- und Unterseite 10c, 10d ausgerichtet sind, verlaufen in den Vorderansichten nach Fig. 3 und Fig. 6 parallel zur Zeichenebene. Der Stapel 10 kann sich aufgrund von den Falzprodukten innewohnenden Rückstellkräften im Bereich des jeweiligen Falzes derart zurückstellen, dass in einem unkomprimierten Zustand eine der Seitenflächen, die durch die Rücken der Falzprodukte gebildet ist, eine größere Höhe aufweist, als die gegenüberliegende Seitenfläche. Die quaderförmige Form des Stapels, auf die hier Bezug genommen wird, liegt dann bei Komprimieren des Stapels und Ausdrücken der Luft vor, wenn die Falzprodukte des Stapels 10 flächig aufeinander aufliegen. Die Greifeinrichtung 16 ist selbstverständlich auch bei Stapeln mit gewölbten Seitenflächen (inkl. Oberseite und Unterseite) einsetzbar.

Die Greifeinrichtung 16 umfasst zumindest ein oberes Halteelement 22 zum Niederhalten der Oberseite 10c des Stapels 10 und zumindest ein unteres Halteelement 24 zum Stützen der Unterseite 10d des Stapels 10.

In der dargestellten Ausführungsform umfasst die Greifeinrichtung eine Mehrzahl von oberen Halteelementen und eine Mehrzahl von unteren Halteelementen. Das obere Halteelement 22 bildet ein erstes oberes Halteelement 22 der Mehrzahl von oberen Halteelementen und das untere Halteelement 24 bildet ein erstes unteres Halteelement 24 der Mehrzahl von unteren Halteelementen. Die Greifeinrichtung 16 umfasst ferner ein zweites oberes Halteelement 26, ein drittes oberes Halteelement 28 und ein viertes oberes Halteelement 30. Weiterhin umfasst die Greifeinrichtung 16 ein zweites unteres Halteelement 32.

In der nachfolgenden Beschreibung wird auf die dargestellte Ausführungsform mit einer Mehrzahl von oberen und unteren Halteelementen Bezug genommen. Wie eingangs erläutert, können aber auch ein einziges oberes und/oder ein einziges unteres Halteelement ausreichen. Die hierin beschrieben Merkmale lassen sich entsprechend auch auf solche Ausführungsformen übertragen.

Die Greifeinrichtung 16 umfasst ferner ein erstes seitliches Begrenzungselement 34 und ein zweites seitliches Begrenzungselement 36, die jeweils einer der zwei einander gegenüberliegenden Seitenflächen 10a, 10b des Stapels 10 zuordenbar sind. Das erste und das zweite Begrenzungselement 34, 36 liegen einander derart gegenüber, dass sie den Stapel 10 zwischen sich aufnehmen können. Hat die Greifeinrichtung 16 einen Stapel 10 aufgenommen, erstrecken sich das erste und das zweite Begrenzungselement 34, 36 im Wesentlichen parallel zu den zwei gegenüberliegenden Seitenflächen 10a, 10b des Stapels 10.

Die unteren Halteelemente 24, 32 definieren in der in den Fig. 2 und 3 dargestellten Stellung, in der sie zur Aufnahme eines Stapels 10 eingerichtet sind, eine Stützebene S zur Auflage des Stapels 10. Die Stützebene S ist vorzugsweise horizontal ausgerichtet, um eine stabile Aufnahme des Stapels 10 zu gewährleisten.

Die oberen Halteelemente 22, 26, 28, 30 können eine Kontaktebene K definieren, die parallel zur Stützebene S ausgerichtet ist. Es ist bevorzugt, dass die oberen Halteelemente 22, 26, 28, 30 den Stapel 10 von Falzprodukten so weiter komprimieren, dass die Oberseite 10c des Stapels 10 in der Kontaktebene K ausgerichtet ist und im Stapel 10 vorhandene Luft aus diesem heraus gepresst wird. Dies ist zur sicheren Handhabung des Stapels 10 aber nicht zwingend erforderlich.

Die Mehrzahl von oberen Halteelementen 22, 26, 28, 30 kann relativ zur Mehrzahl von unteren Halteelementen 24, 32 bewegbar sein. Die oberen Halteelemente 22, 26, 28, 30 und die unteren Halteelemente 24, 32 sind in einer Richtung senkrecht zur Stützebene S bzw. senkrecht zur Unterseite 10d eines aufgenommenen Stapels 10 relativ zueinander bewegbar. Dabei können nur die unteren Halteelemente 24, 32 bewegbar ausgebildet sein, oder es sind sowohl die oberen als auch die unteren Halteelemente 22, 24, 26, 28, 30, 32 bewegbar gelagert.

In der dargestellten Ausführungsform sind die oberen Halteelemente 22, 26, 28, 30 entlang zumindest eines aus erstem und zweitem Begrenzungselement 34, 36 linear verschiebbar gelagert. Insbesondere sind das erste und das zweite obere Halteelement 22, 26 entlang des ersten Begrenzungselements 34 linear verschiebbar gelagert und das zweite und das dritte obere Halteelement 28, 30 sind entlang des zweiten Begrenzungselements 36 verschiebbar gelagert.

Hierzu weisen das erste und das zweite Begrenzungselement jeweils eine Führung 38 für jedes entlang des jeweiligen Begrenzungselements 34, 36 bewegbare obere Halteelement 22, 26, 28, 30 auf. Die Führung 38 erstreckt sich parallel zur angestrebten Bewegungsrichtung der oberen Halteelemente 22, 26, 28, 30. Geeignete Linearführungen sind dem Fachmann bekannt und können hier verwendet werden. Zum Beispiel kann eine Führung 38 in den Begrenzungselementen 34, 36 als Nut ausgebildet sein, die einen Führungsabschnitt 40 des jeweiligen oberen Halteelements 22, 26, 28, 30 aufnimmt und diesen entlang der Längsrichtung der Nut führt, wie in Fig. 2 dargestellt.

In der dargestellten Ausführungsform sind die oberen Halteelemente 22, 26, 28, 30 frei entlang des jeweiligen Begrenzungselements 34, 36 verschiebbar. D.h., dass kein Antrieb und keine Vorspannmittel vorgesehen sind, die die oberen Halteelemente 22, 26, 28, 30 in eine vordefinierte Position bewegen oder in einer solchen halten. Der Bewegungsspielraum der oberen Halteelemente 22, 26, 28, 30 wird hier nur durch ein oberes Ende und ein unteres Ende der jeweiligen Führung 38 beschränkt, an denen die oberen Halteelemente 22, 26, 28, 30 bei maximaler Verschiebung anschlagen. Alternative Lagerungen oder Führungen der oberen Halteelemente 22, 26, 28, 30 sind ebenso denkbar, wie der Einsatz eines Antriebs oder eines Vorspannmittels für die oberen Halteelemente 22, 26, 28, 30.

Alternativ oder zusätzlich kann die Mehrzahl von unteren Halteelementen 24, 32 entlang zumindest eines aus erstem und zweitem Begrenzungselement 34, 36 linear verschiebbar gelagert sein. Die unteren Halteelemente 24, 32 können analog zur linear verschiebbaren Lagerung der oberen Halteelemente 22, 26, 28, 30 in dem entsprechenden Begrenzungselement 34, 36 gelagert sein. Im Allgemeinen ist die Ausbildung und Lagerung der unteren Halteelemente 24, 32 unabhängig von der Ausbildung und Lagerung der oberen Halteelemente 22, 26, 28, 30.

Die Mehrzahl von unteren Halteelementen 24, 32 ist zudem bezüglich zumindest eines aus erstem und zweitem Begrenzungselement 34, 36 schwenkbar gelagert. Das jeweilige Begrenzungselement 34, 36 ist hierzu mit dem jeweiligen unteren Halteelement 24, 32 schwenkbar verbunden, z.B. mittels eines geeigneten Drehgelenks.

Die unteren Halteelemente 24, 32 können auch sowohl linear verschiebbar als auch bezüglich des jeweiligen Begrenzungselements 34, 36 schwenkbar gelagert sein. Die dargestellte Ausführungsform veranschaulicht eine solche kombinierte Lagerung der unteren Halteelemente 24, die anhand des ersten unteren Halteelements 24 näher beschrieben ist. Das zweite untere Halteelement 32 kann analog zum ersten unteren Halteelement 24 ausgebildet sein und entsprechend am zweiten Begrenzungselement 36 gelagert sein.

Das untere Halteelement 24 ist mehrteilig ausgebildet und umfasst zumindest einen ersten Abschnitt 42 und einen zweiten Abschnitt 44. Der erste Abschnitt 42 ist mittels einer Drehachse 42a schwenkbar am ersten Begrenzungselement 34 gelagert. Der zweite Abschnitt 44 ist mittels einer Drehachse 44a schwenkbar am ersten Begrenzungselement 34 gelagert. Der erste und der zweite Abschnitt 42, 44 des unteren Halteelements 24 sind ferner an einem jeweiligen freien Ende mittels einer dritten Drehachse 46 gelenkig miteinander verbunden. Die erste, zweite und dritte Drehachse 42a, 44a, 46 können ebenso wie der erste Abschnitt 42 und der zweite Abschnitt 44 einteilig ausgebildet sein oder mehrteilig ausgebildet sein, wie dies gemäß Fig. 2 für den ersten Abschnitt 42, den zweiten Abschnitt 44 und die zweite Drehachse 44a der Fall ist.

Die erste Drehachse 42a des ersten Abschnitts 42 des unteren Halteelements 24 ist entlang des ersten Begrenzungselements 34 linear verschiebbar gelagert. Hierzu weist das erste Begrenzungselement 34 geeignete Mittel auf, wie z.B. eine Führung oder eine Nut zur Aufnahme der ersten Drehachse 42a. Gemäß Fig. 2 ist die erste Drehachse 42a mit jeweils einem Ende in einer von zwei einander gegenüberliegenden Führungsnuten 48 des ersten Begrenzungselements 34 aufgenommen.

Wird der erste Abschnitt 42 bzw. dessen Drehachse 42a linear entlang des ersten Begrenzungselements 34 verschoben, schwenkt der erste Abschnitt 42 des unteren Halteelements 24 um die erste Drehachse 42a. Zugleich schwenken der erste und der zweite Abschnitt 42, 44 um die dritte Drehachse 46 relativ zueinander, was wiederum bewirkt, dass der zweite Abschnitt 44 um die zweite Drehachse 44a schwenkt. Dadurch wird das untere Halteelement 24 in Richtung des ersten Begrenzungselements 34 geklappt. In dieser Stellung ragt das untere Halteelement 24 nicht in den Zwischenraum zwischen dem ersten und dem zweiten Begrenzungselement 34, 36 hinein.

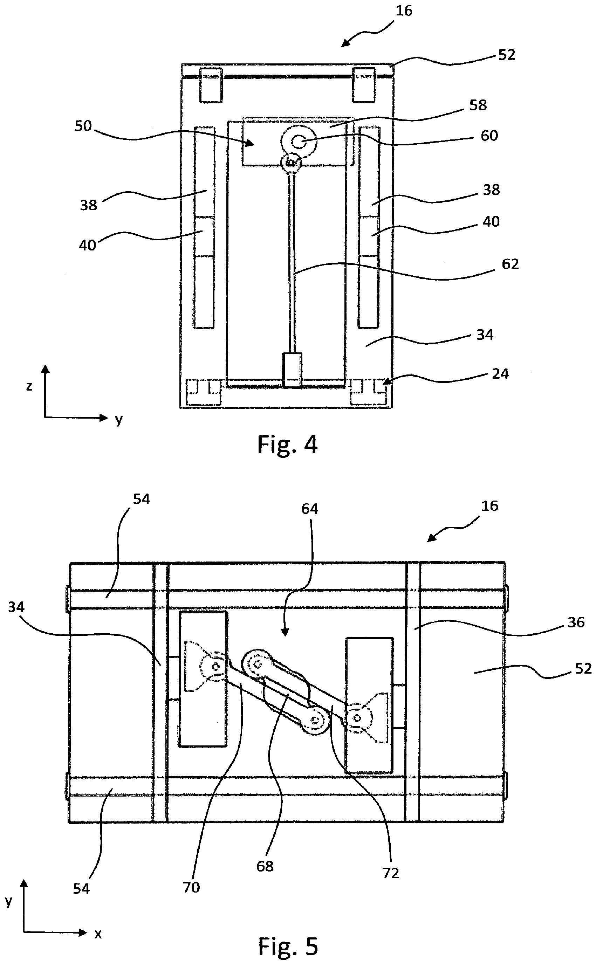

Zum Erzeugen der Bewegung des unteren Halteelements 24 kann dieses ferner geeignete Antriebsmittel 50 aufweisen, die unter Bezugnahme auf Fig. 4 näher beschrieben sind.

Es ist bevorzugt, dass die unteren Halteelemente 24, 32 zwischen einer ersten Stellung, in der sie im Wesentlichen nicht in einen Zwischenraum zwischen dem ersten und dem zweiten Begrenzungselement 34, 36 hineinragen (vgl. Fig. 6a, 6b) und einer zweiten Stellung, in der die unteren Halteelemente 24, 32 in den Zwischenraum zwischen dem ersten und dem zweiten Begrenzungselement 34, 36 hineinragen und den Zwischenraum nach unten begrenzen, um eine Aufnahme für den Stapel 10 zu bilden (vgl. Fig. 2, 3), bewegbar sind. In der zweiten Stellung sind die unteren Halteelemente 24, 32 zur Aufnahme eines Stapels 10 eingerichtet und definieren die Stützebene S.

Diese Bewegbarkeit zwischen der ersten und der zweiten Stellung ist bevorzugt durch den vorangehend beschrieben Mechanismus der unteren Halteelemente umsetzbar, wobei zugleich eine sanfte Ablage des Stapels im Ablagebereich erreicht wird. Andere Mechanismen, wie z.B. eine einfachere lineare Verschiebbarkeit oder ein einfaches Klappen eines einteiligen Halteelements, sind ebenso denkbar.

Unabhängig von der Ausbildung und Lagerung der oberen und unteren Halteelemente 22 bis 32 können das erste und das zweite Begrenzungselement 34, 36 relativ zueinander bewegbar sein. Dabei kann nur eines von beiden Begrenzungselementen 34, 36 bewegbar sein, es können aber auch beide Begrenzungselemente 34, 36 bewegbar sein.

Das erste und das zweite Begrenzungselement 34, 36 sind vorzugsweise linear in Richtung der jeweiligen Seitenfläche 10a, 10b des aufgenommen Stapels 10, die dem jeweiligen Begrenzungselement 34, 36 zugewandt ist, bewegbar. Die Bewegungsrichtung des ersten und des zweiten Begrenzungselements 34, 36 ist somit parallel zur Stützebene S und senkrecht zu den zwei einander gegenüberliegenden Seitenflächen 10a, 10b des Stapels 10. Es ist bevorzugt, dass das erste und das zweite Begrenzungselement 34, 36 so weit relativ zueinander bewegbar sind, dass sie an der jeweiligen Seitenfläche 10a, 10b des Stapels 10 anliegen. Dadurch wird der Stapel 10 während des Bewegens durch die Greifeinrichtung 16 weiter gesichert und behält zuverlässig seine Form bei.

Hierzu definiert das erste Begrenzungselement 34 eine erste Begrenzungsebene B1 und das zweite Begrenzungselement 36 definiert eine zweite Begrenzungsebene B2. Die Begrenzungsebenen B1 und B2 sind senkrecht zur Stützebene S sowie parallel zu den Seitenflächen 10a, 10b eines aufgenommenen Stapels 10 angeordnet.

Um das erste und das zweite Begrenzungselement 34, 36 relativ zueinander bewegbar zu lagern, umfasst die Greifeinrichtung 16 vorzugsweise einen Träger 52, an dem zumindest eines aus erstem und zweitem Begrenzungselement 34, 36 linear verschiebbar gelagert ist.

In der dargestellten Ausführungsform umfasst der Träger 52 zwei Führungsstäbe 54 und das erste und das zweite Begrenzungselement 34, 36 umfassen entsprechende Öffnungen 56, durch die sich die Führungsstäbe 54 hindurch erstrecken. Die Begrenzungselemente 34, 36 sind entlang der Führungsstäbe 54 verschiebbar.

Das erste und das zweite Begrenzungselement 34, 36 können jeweils durch einen eigenen Antrieb bewegt werden oder sie können mittels eines geeigneten Mechanismus mit einem gemeinsamen Antrieb gekoppelt sein, wie unter Bezugnahme auf Fig. 5 beschrieben ist.

In den Fig. 2 bis 7 ist ferner ein kartesisches Koordinatensystem angegeben. Es ist bevorzugt, dass die x-y-Ebene dieses Koordinatensystems horizontal ausgerichtet ist und die z-Achse vertikal ausgerichtet ist. Die Stützebene S ist vorzugsweise parallel zur x-y-Ebene. Die ersten und die zweiten Halteelemente 22, 24, 26, 28, 30, 32 sind vorzugsweise in Richtung der z-Achse relativ zu einander bewegbar, während das erste und das zweite Begrenzungselement 34, 36 bevorzugt in Richtung der x-Achse relativ zu einander bewegbar sind. Die zwei einander gegenüberliegenden Seitenflächen 10a, 10b des Stapels 10 sind dann parallel zur y-z-Ebene ausgerichtet. Die Drehachsen 42a, 44a, 46 erstrecken sich bevorzugt parallel zur y-Achse. Die Greifeinrichtung 16 ist schließlich bevorzugt um die z-Achse drehbar an der Handhabungsvorrichtung 2 gelagert.

Fig. 4 zeigt die Greifeinrichtung 16 in einer Seitenansicht zur Erläuterung der Antriebsmittel 50 für das erste untere Halteelement 24. Entsprechende Antriebsmittel können auch für das zweite untere Halteelement 32 vorgesehen sein. Die Antriebsmittel 50 sind in dieser Ausführungsform zum Bewegen der ersten Drehachse 42a des ersten Halteelements 24 senkrecht zur Stützebene S eingerichtet. Die Antriebsmittel 50 umfassen einen Drehantrieb 58 mit einer durch diesen drehbaren Ausgangswelle 60. Auf der Ausgangswelle 60 ist eine Pleuelstange 62 exzentrisch gelagert, wobei das der Ausgangswelle 60 gegenüberliegende Ende der Pleuelstange 62 mit dem unteren Halteelement 24, vorzugsweise mit der ersten Drehachse 42a des unteren Halteelements 24 verbunden ist. Die Pleuelstange 62 ist bezüglich des unteren Halteelements 24 schwenkbar. Durch diese Anordnung wird eine Drehbewegung der Ausgangswelle 60 eine lineare Hubbewegung des unteren Halteelements 24 umgewandelt. Dabei ist das untere Haltelement 24 mittels der Drehachse 42a des ersten Abschnitts 42 des unteren Halteelements 24 linear in dem ersten Begrenzungselement 34 geführt. Alternative Antriebe bzw. Antriebsmechanismen sind durchaus denkbar.

Der Antriebsmechanismus 64 zur Bewegung des ersten und des zweiten Begrenzungselements 34, 36 wird anhand der Fig. 5 beschrieben. Der Antriebsmechanismus 64 umfasst einen Drehantrieb 66 (Fig. 2) mit einer durch ihn angetriebenen Ausgangswelle 68, auf der ein Mitnehmer 68 drehfest gelagert ist. Am Mitnehmer 68 sind ein erster Verbindungsstab 70 und ein zweiter Verbindungsstab 72 exzentrisch bezüglich der Ausgangswelle 68 des Drehantriebs 66 drehbar gelagert. Der erste Verbindungsstab 70 ist mit einem dem Mitnehmer 68 gegenüberliegenden Ende schwenkbar mit dem ersten Begrenzungselement 34 verbunden und der zweite Verbindungsstab 72 ist mit einem dem Mitnehmer 68 gegenüberliegenden Ende schwenkbar mit dem zweiten Begrenzungselement 36 verbunden. Ein Drehen des Mitnehmers 68 durch den Drehantrieb 66 bewirkt, dass diese Drehbewegung mittels des ersten und des zweiten Verbindungsstabs 70, 72 in eine Linearbewegung des ersten und zweiten Begrenzungselements 34, 36 umgewandelt wird. Dabei sind das erste und zweite Begrenzungselement 34, 36 vorzugsweise entlang der Führungsstäbe 54 geführt. Je nach Drehrichtung des Drehantriebs 66 und des Mitnehmers 68 werden das erste und das zweite Begrenzungselement 34, 36 auseinandergeschoben oder zusammengezogen. Auch hier sind ohne Weiteres andere Antriebsmechanismen einsetzbar.

In den Fig. 6a bis 6g ist die Greifeinrichtung 16 in verschiedenen Zuständen während des erfindungsgemäßen Verfahrens dargestellt. Es versteht sich, dass es dabei vielmehr auf die durch die Greifeinrichtung 16 ausgeführten Verfahrensschritte ankommt, als auf die hierzu vorgesehenen Vorrichtungsmerkmale der Greifeinrichtung 16. Das nachstehend erläuterte Verfahren ist daher auch mit alternativen Ausführungsformen der Greifeinrichtung 16 ausführbar und nicht auf die abgebildete und unter Bezugnahme auf die Fig. 1 bis 5 beschriebene Ausführungsform beschränkt.

Gemäß Fig. 6a ist der Stapel 10 im Auslegebereich 12 der Falzmaschine 1 angeordnet. Nach Fig. 6a und 6b wird die Greifeinrichtung 16 ebenfalls in Auslegebereich 12 angeordnet. Dabei ist es bevorzugt, dass die Greifeinrichtung 16 derart angeordnet wird, dass zwei einander gegenüberliegenden Seitenflächen 10a, 10b des Stapels 10 von Falzprodukten zwischen dem ersten und dem zweiten Begrenzungselement 34, 36 der Greifeinrichtung 16 angeordnet sind. Die Oberseite 10c des Stapels 10 ist unterhalb oder in der Kontaktebene K der oberen Halteelemente 22, 26, 28, 30 angeordnet und die Unterseite 10d des Stapels ist oberhalb der durch die unteren Halteelemente 24, 32 definierten Stützebene S angeordnet, sodass die Oberseite 10c und die Unterseite 10d des Stapels 10 zwischen den oberen Halteelementen 22, 26, 28, 30 und den unteren Halteelementen 24, 32 angeordnet sind.

In Fig. 6a ist zu sehen, dass die Greifeinrichtung 16 zunächst über dem Stapel 10 angeordnet wird und dann im Wesentlichen linear vertikal nach unten bewegt wird. Die unteren Halteelemente 24, 32 befinden sich in der ersten Stellung, in der sie nicht in den Zwischenraum zwischen dem ersten und dem zweiten Begrenzungselemente 34, 36 hineinragen. Die oberen Halteelemente 22, 26, 28, 30 befinden sich in einer unteren Stellung, in der ihr Führungsabschnitt 40 am unteren Ende der als Nut ausgebildeten Führung 38 anschlägt (vgl. Fig. 2). Das erste und das zweite Begrenzungselement 32, 34 sind in horizontaler Richtung beabstandet zueinander angeordnet, sodass der zwischen ihnen definierte Abstand größer ist als der Abstand zwischen den zwei gegenüberliegenden Seitenflächen 10a, 10b des Stapels 10. Dadurch kollidieren das erste und das zweite Begrenzungselement 34, 36 nicht mit dem Stapel 10, wenn sie nach unten bewegt werden.

Wie in Fig. 6b zu erkennen ist, kommen die oberen Haltelemente 22, 26, 28, 30 in Kontakt mit der Oberseite 10c des Stapels 10, wenn die Greifeinrichtung 16 weiter nach unten bewegt wird. Bewegt sich die Greifeinrichtung dann weiter nach unten, verschieben sich die oberen Halteelemente 22, 26, 28, 30 relativ zum Begrenzungselement 34 entlang der Führung 38 nach oben. Die Oberseite 10c wird dadurch zuverlässig während des weiteren Verfahrens durch die oberen Halteelemente 22, 26, 28, 30 niedergehalten.

Die Greifeinrichtung 16 wird so weit nach unten bewegt, bis die unteren Halteelemente 24, 32 unterhalb der Unterseite 10d des Stapels 10 bzw. der durch diese definierten Ebene angeordnet ist. Hierzu ist es bevorzugt, dass der Auslegebereich 12 der Falzmaschine 1 derart ausgebildet ist, dass er im Bereich der Begrenzungselemente 34, 36 und des unteren Halteelements 24 Aussparungen für diese aufweist, während er im Bereich der Unterseite 10c des Stapels 10 eine ausreichende Auflagefläche für den Stapel 10 bildet.

Ist die Greifeinrichtung 16 wie gewünscht im Auslegebereich 12 angeordnet, wird der im Auslegebereich 12 angeordnete Stapel 10 von Falzprodukten mittels der Greifeinrichtung 16 aufgenommen.

Fig. 6c zeigt, dass die unteren Halteelemente 24, 32 hierzu von der ersten Stellung in die zweite Stellung bewegt werden, in der die unteren Halteelemente 24, 32 in den Zwischenraum zwischen dem ersten und dem zweiten Begrenzungselement 34, 36 hineinragen und diesen Zwischenraum nach unten begrenzt, um eine Aufnahme für den Stapel 10 zu bilden und die Stützebene S zu definieren. Während des Bewegens der unteren Halteelemente 24, 32 aus der ersten Stellung in die zweite Stellung können die unteren Halteelemente 24, 32 beabstandet zur Unterseite 10c des Stapels 10 angeordnet sein und erst nach dem Bewegen in die zweite Stellung zusammen mit der Greifeinrichtung 16 nach oben bewegt werden, bis sie in Kontakt mit der Unterseite 10c des Stapels 10 treten. Die Greifeinrichtung 16 kann aber auch so angeordnet sein, dass die unteren Halteelemente 24, 32 die Unterseite 10c des Stapel 10 berühren, sobald sie in die zweite Stellung bewegt werden. Aufgrund der freien Lagerung der oberen Halteelemente 22, 26, 28, 30 folgen diese stets der Oberseite 10c des Stapels 10.

Wie ebenfalls in Fig. 6c zu sehen ist, wird zumindest eines aus erstem und zweitem Begrenzungselement 34, 36, hier beide Begrenzungselemente 34, 36, in Richtung der dem jeweiligen Begrenzungselement 34, 36 zugewandten Seitenfläche 10a, 10b des Stapels 10 bewegt. Vorzugsweise werden die Begrenzungselement 34, 36 so weit in Richtung der Seitenflächen 10a, 10b des Stapels 10 bewegt, bis sie diese Seitenflächen 10a, 10b berühren, um den Stapel 10 seitlich abzustützen. Das Bewegen der Begrenzungselemente 34, 36 kann vor, nach oder zeitgleich mit dem Bewegen des unteren Halteelements 24, 32 in die zweite Stellung erfolgen.

In dem in Fig. 6c dargestellten Zustand ist der Stapel 10 vollständig durch die Greifeinrichtung 16 aufgenommen. Bevorzugt liegt die Greifeinrichtung 16 zumindest an vier Seiten des Stapels 10 an, um die Falzprodukte des Stapels 10 in ihrer Position relativ zueinander zu sichern und so einen sicheren und formstabilen Transport des Stapels 10 zu ermöglichen. Die oberen Halteelemente 22, 26, 28, 30 liegen auf der Oberseite 10c des Stapels 10 auf und sind vorzugsweise derart ausgelegt, dass ihre Gewichtskraft Luft aus dem Stapel 10 presst, so dass die Falzprodukte eine im Wesentlichen ebene Gestalt annehmen.

Der aufgenommene Stapel 10 von Falzprodukten 10 wird dann angehoben und mittels der Greifeinrichtung 16 aus dem Auslegebereich 12 in den Ablagebereich 14 bewegt.

Wie sich aus einer Zusammenschau der Fig. 6d und 6e ergibt, wird die Greifeinrichtung 16 zunächst über dem Ablagebereich 14 angeordnet und dann in die entsprechende für den jeweiligen Stapel 10 vorgesehene Ablageposition bewegt. Die Greifeinrichtung 16 wird soweit wie möglich nach unten bewegt, um einen minimalen Abstand zwischen der Unterseite 10c des Stapels 10 und der Ablagefläche des Ablagebereichs 14 zu bewirken.

Da im Ablagebereich 14 in der Regel ein standardisiertes Transportmedium für die Stapel 10 von Falzprodukten vorgesehen ist, kann es der Fall sein, dass es nicht möglich ist, die Begrenzungselemente 34, 36 durch entsprechende Ausnehmungen im Transportmedium bzw. der Ablagefläche hindurchzubewegen. Die Unterseite 10c des Stapels 10 kann dann mit der Greifeinrichtung 16 gemäß der dargestellten Ausführungsform nicht unmittelbar in Kontakt mit der Ablagefläche gebracht werden. Vielmehr verbleibt zwischen der Unterseite 10c des Stapels 10 und der Ablagefläche ein Abstand, dessen Größe durch die Konstruktion der unteren Halteelemente 24, 32 bestimmt ist. Es versteht sich, dass das Transportmedium bzw. der Ablagebereich 14 auch an die Greifeinrichtung 16 angepasst sein können, so dass eine unmittelbare Ablage des Stapels 10 auf der Ablagefläche des Ablagebereichs 14 möglich ist.

Ist die Greifeinrichtung 16 im Ablagebereich 14 angeordnet, wird der bewegte Stapel 10 von Falzprodukten im Ablagebereich 14 abgelegt. In der dargestellten Ausführungsform werden die unteren Halteelemente 24, 32 aus der zweiten Stellung in die erste Stellung bewegt, wodurch der Stapel 10 nach unten freigegeben wird.

Wie in Fig. 6f zu sehen ist, rutscht der Stapel 10 dann nach unten, bis die Unterseite 10d des Stapels 10 im Ablagebereich 14 flächig aufliegt. Dabei werden die oberen Halteelemente 22, 26, 28, 30 mit der Oberseite 10c des Stapels 10 mitgeführt, bis die Unterseite 10d des Stapels 10 im Ablagebereich 14 aufliegt. Dadurch werden die Falzprodukte des Stapels 10 bis zur endgültigen Ablage im Ablagebereich 14 gesichert. Es ist weiterhin bevorzugt, dass der Stapel 10 während des Rutschens nach unten auch durch das erste und das zweite Begrenzungselement 34, 36 geführt ist. Entsprechend werden das erste und das zweite Begrenzungselement 34, 36 bevorzugt erst dann seitlich vom Stapel 10 wegbewegt, wenn dieser vollständig im Ablagebereich 14 aufliegt.

Gemäß Fig. 6g kann die Greifeinrichtung 16 dann aus dem Ablagebereich 14 bewegt werden. Wird die Greifeinrichtung 16 aus dem Ablagebereich 14 angehoben, rutschen die oberen Halteelemente 22, 26, 28, 30 relativ zu den Begrenzungselementen 34, 36 nach unten.

Kann die Greifeinrichtung 16 nicht mehr mit dem Stapel 10 kollidieren, wird sie zurück in den Auslegebereich 12 bewegt, um das Verfahren für zumindest einen weiteren Stapel 10 von Falzprodukten zu wiederholen.

Ein oder mehre nachfolgende Stapel von Falzprodukten werden dann auf analoge Weise aus dem Auslegebereich 12 in den Ablagebereich 14 bewegt. Das Ablegen der Stapel 10 im Ablagebereich 14 erfolgt dann bevorzugt in einem vorbestimmten Muster, in dem die Stapel 10 versetzt zueinander angeordnet sind.

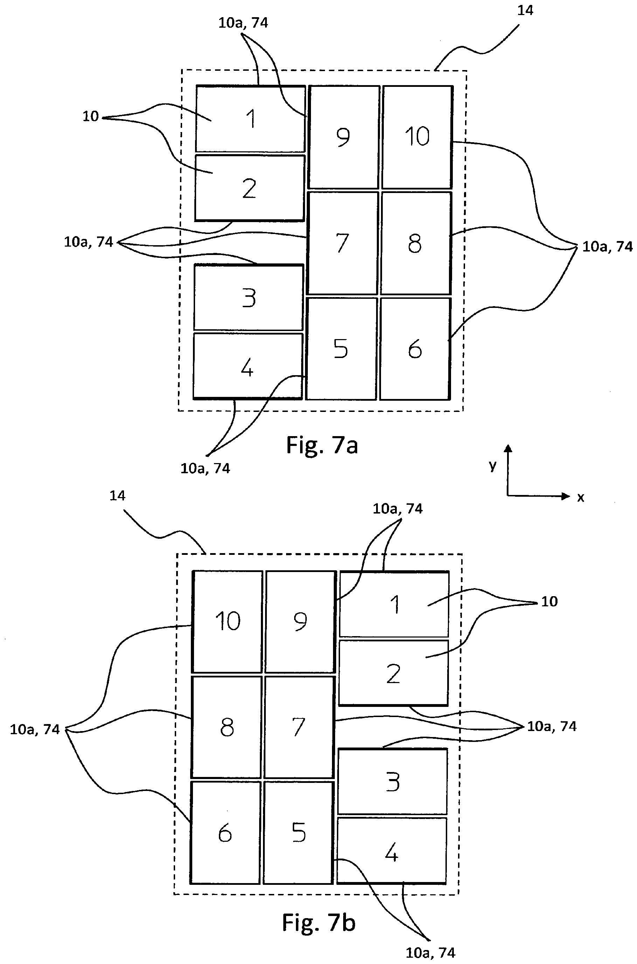

Die Fig. 7a und 7b zeigen mögliche vorbestimmte Muster zur Ablage der Stapel 10. Dabei sind jeweils zehn mit den Ziffern 1 bis 10 nummerierte Stapel 10 im Ablagebereich 14, vorzugsweise auf einem Transportmedium angeordnet. Gemäß des vorbestimmten Musters sind zwei Stapel 10 im Ablagebereich 14 derart gegenüberliegend angeordnet, dass die Seitenflächen 10a der Stapels, die jeweils durch Rücken 74 der Falzprodukte der beiden Stapel 10 gebildet werden, voneinander abgewandt sind. D.h., dass Seitenflächen 10b der Stapel 10, die den durch die Rücken 74 gebildeten Seitenflächen 10a gegenüberliegen, einander zugewandt sind. Die Stapel 10 von Falzprodukten weisen im Bereich der Seitenfläche 10a eine größere Höhe auf als im Bereich der gegenüberliegenden Seitenflächen 10b. Durch das vorbestimmte Muster wird erreicht, dass die Falzprodukte eines Stapels 10 in Richtung eines gegenüberliegenden Stapels 10 nach unten geneigt sind. Im Falle eines Verrutschens der Falzprodukte wird somit vermieden, dass die Falzprodukte aus dem Ablagebereich 14 bzw. vom dem Transportmedium fallen.

Bevorzugt werden die Stapel 10 daher immer paarweise im Ablagebereich 14 angeordnet, um eine optimale Ausnutzung der im Ablagebereich 14 bzw. auf dem Transportmedium zur Verfügung stehenden Fläche zu erreichen, können die Paare von Stapeln 10 auch unterschiedlich zueinander ausgerichtet sein. Im in Fig. 7a dargestellten Muster sind die Paare 1-2 und 3-4 von Stapeln 10 daher um 90° relativ zu den Paaren 9-10, 7-8, 5-6 von Stapeln 10 gedreht. Sollte es die zur Verfügung stehende Fläche nicht erlauben, nur paarweise angeordnete Stapel 10 im Ablagebereich abzulegen, können auch einzelne Stapel 10 z.B. in einer Reihe angeordnet sein. Dabei ist es dann bevorzugt, dass die durch die Rücken 74 der Falzprodukte gebildete Seitenfläche 10a dieser Stapel 10 bezüglich des Ablagebereichs nach außen gewandt ist, so dass die Falzprodukte im Falle des Verrutschens höchstens ins Innere des Ablagebereichs 14 bzw. des Transportmediums verrutschen und nicht von diesem herunterfallen.

Das Muster gemäß Fig. 7b ist spiegelverkehrt zum Muster nach Fig. 7a. Zum Beispiel kann das Muster nach Fig. 7a eine erste Lage von Stapeln 10 auf einem Transportmedium darstellen. Auf dieser ersten Lage von Stapeln 10 kann ein Trennelement wie z.B. aus Pappkarton, angeordnet sein, das alle Stapel 10 der ersten Lage überdeckt. Auf dem Trennelement kann dann eine zweite Lage von Stapeln 10 gemäß dem Muster nach Fig. 7b angeordnet werden. Auf diese Weise wird eine gleichmäßige Gewichtsverteilung auf dem Transportmedium erreicht und eine Schieflage der Lagen zueinander vermieden.

Es versteht sich, dass die vorbestimmten Muster beliebig an die Größe des Ablagebereichs 14 bzw. des Transportmediums sowie an die Dimensionen der Stapel 10 angepasst werden können.

Aus den Fig. 7a und 7b ist ferner ersichtlich, dass die Handhabungsvorrichtung 2 der Greifeinrichtung 16 ausreichend Bewegungsmöglichkeiten bereitstellen muss. Um die Stapel versetzt zueinander im Ablagebereich 14 anzuordnen, muss die Greifeinrichtung 16 zumindest in zwei Richtungen in einer Ebene, vorzugsweise der x-y-Ebene, bewegbar sein. Um die Stapel 10 relativ zueinander gedreht im Ablagebereich 14 anzuordnen, muss die Greifeinrichtung 16 um eine Achse, vorzugsweise die z-Achse, drehbar sein. Um ferner mehrere Lagen von Stapeln übereinander anzuordnen und/oder einen Höhenunterschied zwischen dem Auslegebereich 12 und dem Ablagebereich 14 zu überwinden, ist die Greifeinrichtung 16 zudem senkrecht zur Ebene des Ablagebereichs 14, also in der Regel in z-Richtung bewegbar auszubilden. Auch ein beliebiger seitlicher Versatz in x-y-Richtung zwischen dem Auslegebereich 12 und dem Ablagebereich 14 ist zu berücksichtigen. Die Ausbildung der Handhabungsvorrichtung 2 als Knickarmroboter hat sich daher als besonders vorteilhaft erwiesen, um der Greifeinrichtung 16 ausreichend Bewegungsfreiheiten zu ermöglichen.

## Patentansprüche

1. Handhabungsvorrichtung (2) zum Übergeben eines Stapels (10) von Produkten, insbesondere von gefalzten, gehefteten oder gebundenen Produkten, von einem Aufnahmebereich (12) in einen Ablagebereich (14),
wobei die Handhabungsvorrichtung (2) eine Greifeinrichtung (16) umfasst, die in drei Dimensionen bewegbar ist und die dazu eingerichtet ist, den im Aufnahmebereich (12) angeordneten Stapel (10) von Produkten aufzunehmen, zu bewegen und im Ablagebereich (14) abzulegen;
wobei die Greifeinrichtung (16) ein oberes Halteelement (22, 26, 28, 30) zum Niederhalten einer Oberseite (10c) des aufgenommenen Stapels (10) und ein unteres Halteelement (24, 32) zum Stützen einer der Oberseite (10c) gegenüberliegenden Unterseite (10d) des aufgenommenen Stapels (10) umfasst;
wobei die Greifeinrichtung (16) weiterhin ein erstes seitliches Begrenzungselement (34) und ein zweites seitliches Begrenzungselement (36) umfasst, die jeweils einer von zwei einander gegenüberliegenden Seitenflächen (10a, 10b) eines Stapels (10) zuordenbar sind;
**dadurch gekennzeichnet, dass**
das untere Halteelement (24, 32) bezüglich zumindest eines aus erstem und zweitem Begrenzungselement (34, 36) schwenkbar gelagert ist.

2. Handhabungsvorrichtung (2) nach Anspruch 1, **dadurch gekennzeichnet, dass** das obere und das untere Halteelement (22, 24, 26, 28, 30, 32) relativ zueinander bewegbar sind.

3. Handhabungsvorrichtung (2) nach Anspruch 1 oder 2, **dadurch gekennzeichnet, dass** das untere Halteelement (24, 32) in einer Stellung eine Stützebene (S) zur Auflage des Stapels (10) definiert und sich das erste und das zweite Begrenzungselement (34, 36) im Wesentlichen senkrecht zu der Stützebene (S) erstrecken.

4. Handhabungsvorrichtung (2) nach einem der vorangehenden Ansprüche, **dadurch gekennzeichnet, dass** das erste und das zweite Begrenzungselement (34, 36) relativ zueinander bewegbar sind.

5. Handhabungsvorrichtung (2) nach Anspruch 4, **dadurch gekennzeichnet, dass** zumindest eines aus erstem und zweitem Begrenzungselement (34, 36) linear verschiebbar an einem Träger (52) der Greifeinrichtung (16) gelagert ist.

6. Handhabungsvorrichtung (2) nach einem der vorangehenden Ansprüche, **dadurch gekennzeichnet, dass** das obere Halteelement (22, 26, 28, 30) entlang zumindest eines aus erstem und zweitem Begrenzungselement (34, 36) linear verschiebbar gelagert ist.

7. Handhabungsvorrichtung (2) nach einem der vorangehenden Ansprüche, **dadurch gekennzeichnet, dass** das untere Halteelement (24, 32) entlang zumindest eines aus erstem und zweitem Begrenzungselement (34, 36) linear verschiebbar gelagert ist.

8. Handhabungsvorrichtung (2) nach einem der vorangehenden Ansprüche, **dadurch gekennzeichnet, dass** die Handhabungsvorrichtung (2) weiterhin einen Roboter, insbesondere einen Portalroboter oder Knickarmroboter, umfasst und der Roboter einen Roboterarm (18) mit einem freien Ende (20) umfasst, wobei die Greifeinrichtung (16) an dem freien Ende (20) des Roboterarms (18) angeordnet ist.

9. Falzmaschine (1), die entlang einer Durchlaufrichtung (D) hintereinander angeordnet umfasst:
mindestens ein Falzwerk (6) zum Falten von flächigen Medien zu Falzprodukten;
eine Stapelvorrichtung (8) zum Bilden eines Stapels (10) aus den Falzprodukten;
einen Auslegebereich (12) zum Auslegen des Stapels (10) von Falzprodukten, der einen Aufnahmebereich (12) bildet; und
einen der Falzmaschine (1) zugeordneten Ablagebereich (14);
**dadurch gekennzeichnet, dass** die Falzmaschine (1) weiterhin eine Handhabungsvorrichtung (2) nach einem der Ansprüche 1 bis 8 umfasst.

10. Verfahren zum Übergeben von Stapeln (10) von Produkten, insbesondere von gefalzten, gehefteten oder gebundenen Produkten, von einem Aufnahmebereich (12) in einen Ablagebereich (14), wobei das Verfahren die Schritte umfasst:
a) Anordnen eines Stapels (10) von Produkten und einer Greifeinrichtung (16) relativ zueinander im Aufnahmebereich (12), wobei der Stapel (10) durch eine Mehrzahl aufeinanderliegender Produkte gebildet ist, von denen das unterste Produkt flächig im Aufnahmebereich (12) aufliegt;
b) Aufnehmen des im Aufnahmebereich (12) angeordneten Stapels (10) mittels der Greifeinrichtung (16);
c) Anheben des aufgenommen Stapels (10) und Bewegen des Stapels (10) aus dem Aufnahmebereich (12) in den Ablagebereich (14) mittels der Greifeinrichtung (16);
d) Ablegen des bewegten Stapels (10) im Ablagebereich (14);
e) Wiederholen der Schritte a) bis d) für zumindest einen weiteren Stapel (10); wobei Schritt a) des Anordnens der Greifeinrichtung (16) derart erfolgt, dass zwei einander gegenüberliegende Seitenflächen (10a, 10b) des Stapels (10) von Produkten zwischen einem ersten und einem zweiten seitlichen Begrenzungselement (34, 36) der Greifeinrichtung (16) angeordnet sind und eine Oberseite (10c) und eine Unterseite (10d) des Stapels (10) zwischen einem oberen Halteelement (22, 26, 28, 30) und einem unteren Halteelement (24, 32) der Greifeinrichtung (16) angeordnet sind; **dadurch gekennzeichnet, dass** sich das untere Halteelement (24, 32) während des Schritts a) in einer ersten Stellung befindet, in der es im Wesentlichen nicht in einen Zwischenraum zwischen dem ersten und dem zweiten seitlichen Begrenzungselement (34, 36) hineinragt, und
wobei Schritt b) das Bewegen des unteren Halteelements (24, 32) aus der ersten Stellung in eine zweite Stellung umfasst, in der das untere Halteelement (24, 32) in den Zwischenraum zwischen dem ersten und dem zweiten seitlichen Begrenzungselement (34, 36) hineinragt und den Zwischenraum nach unten begrenzt, um eine Aufnahme für den Stapel (10) zu bilden.

11. Verfahren nach Anspruch 10, **dadurch gekennzeichnet, dass** der Schritt d) des Ablegens des bewegten Stapels (10) weiterhin umfasst:
- Bewegen des unteren Halteelements (24, 32) aus der zweiten Stellung in die erste Stellung und dadurch Freigeben des Stapels (10) nach unten;
- Mitführen des oberen Halteelements (22, 26, 28, 30) mit der Oberseite (10c) des Stapels (10) während des Ablegens, bis die Unterseite (10d) des Stapels (10) im Ablagebereich (14) aufliegt.

12. Verfahren nach einem der Ansprüche 10 oder 11, **dadurch gekennzeichnet, dass** der Schritt b) des Aufnehmens des Stapels (10) von Produkten weiterhin umfasst:
b1) Bewegen zumindest eines aus erstem und zweitem Begrenzungselement (34, 36) in Richtung einer diesem Begrenzungselement (34, 36) zugewandten Seitenfläche (10a, 10b) des Stapels (10); und
b2) vorzugsweise Bewegen zumindest eines aus oberem und unterem Halteelement (22, 24, 26, 28, 30, 32) relativ zu einer diesem Halteelement (22, 24, 26, 28, 30, 32) zugewandten Oberseite (10c) oder Unterseite (10d) des Stapels (10), die sich senkrecht zu den Seitenflächen (10a, 10b) des Stapels (10) erstrecken.

## Claims

1. Handling device (2) for transferring a stack (10) of products, in particular of folded, stitched or bound products, from a receiving region (12) to a depositing region (14),
wherein the handling device (2) comprises a gripping installation (16) which is movable in three dimensions and is configured for receiving and moving the stack (10) of products disposed in the receiving region (12) and depositing said stack (10) in the depositing region (14); wherein the gripping installation (16) comprises an upper holding element (22, 26, 28, 30) for holding down an upper side (10c) of the received stack (10), and a lower holding element (24, 32) for supporting a lower side (10d), opposite the upper side (10c), of the received stack (10);
wherein the gripping installation (16) furthermore comprises a first lateral delimitation element (34) and a second lateral delimitation element (36), said delimitation elements (34, 36) each being able to be assigned to one of two mutually opposite lateral faces (10a, 10b) of a stack (10);
**characterized in that**
the lower holding element (24, 32) is mounted so as to be pivotable in relation to at least the first and/or the second delimitation element (34, 36).

2. Handling device (2) according to Claim 1, **characterized in that** the upper and the lower holding element (22, 24, 26, 28, 30, 32) are movable relative to one another.

3. Handling device (2) according to Claim 1 or 2, **characterized in that** the lower holding element (24, 32) in one position defines a support plane (S) for bearing the stack (10), and the first and the second delimitation element (34, 36) extend so as to be substantially perpendicular to the support plane (S).

4. Handling device (2) according to one of the preceding claims, **characterized in that** the first and the second delimitation element (34, 36) are movable relative to one another.

5. Handling device (2) according to Claim 4, **characterized in that** at least the first and/or second delimitation element (34, 36) is mounted so as to be displaceable in a linear manner on a support (52) of the gripping installation (16).

6. Handling device (2) according to one of the preceding claims, **characterized in that** the upper holding element (22, 26, 28, 30) is mounted so as to be displaceable in a linear manner along at least the first and/or the second delimitation element (34, 36).

7. Handling device (2) according to one of the preceding claims, **characterized in that** the lower holding element (24, 32) is mounted so as to be displaceable in a linear manner along at least the first and/or the second delimitation element (34, 36).

8. Handling device (2) according to one of the preceding claims, **characterized in that** the handling device (2) furthermore comprises a robot, in particular a gantry robot or an articulated arm robot, and the robot comprises a robotic arm (18) having a free end (20), wherein the gripping installation (16) is disposed on the free end (20) of the robotic arm (18).

9. Folding machine (1) which, disposed in succession along a processing direction (D), comprises:
at least one folding unit (6) for folding planar media so as to form folded products;
a stacking device (8) for forming a stack (10) from the folded products;
a placing region (12) for placing the stack (10) of folded products, said placing region (12) forming a receiving region (12); and
a depositing region (14) assigned to the folding machine (1) ;
**characterized in that** the folding machine (1) furthermore comprises a handling device (2) according to one of Claims 1 to 8.

10. Method for transferring stacks (10) of products, in particular of folded, stitched or bound products, from a receiving region (12) to a depositing region (14), wherein the method comprises the following steps:
a) disposing a stack (10) of products and a gripping installation (16) relative to one another in the receiving region (12), wherein the stack (10) is formed by a plurality of products that lie on top of one another, of which the bottom-most product bears in a planar manner on the receiving region (12);
b) receiving the stack (10) disposed in the receiving region (12) by means of the gripping installation (16);
c) lifting the received stack (10) and moving the stack (10) from the receiving region (12) to the depositing region (14) by means of the gripping installation (16);
d) depositing the moved stack (10) in the depositing region (14);
e) repeating steps a) to d) for at least one further stack (10);
wherein step a) of disposing the gripping installation (16) takes place in such a manner that two mutually opposite lateral faces (10a, 10b) of the stack (10) of products are disposed between a first and a second lateral delimitation element (34, 36) of the gripping installation (16), and an upper side (10c) and a lower side (10d) of the stack (10) are disposed between an upper holding element (22, 26, 28, 30) and a lower holding element (24, 32) of the gripping installation (16);
**characterized in that**
the lower holding element (24, 32) during step a) is situated in a first position in which said lower holding element (24, 32) does not substantially protrude into an intermediate space between the first and the second lateral delimitation element (34, 36), and
wherein step b) comprises the moving of the lower holding element (24, 32) from the first position to a second position in which the lower holding element (24, 32) protrudes into the intermediate space between the first and the second lateral delimitation element (34, 36) and towards the bottom delimits the intermediate space so as to form a receptacle for the stack (10).

11. Method according to Claim 10, **characterized in that** step d) of depositing the moved stack (10) furthermore comprises:
- moving the lower holding element (24, 32) from the second position to the first position, and on account thereof releasing the stack (10) towards the bottom;
- conjointly guiding the upper holding element (22, 26, 28, 30) with the upper side (10c) of the stack (10) during the depositing until the lower side (10d) of the stack (10) bears on the depositing region (14).

12. Method according to one of Claims 10 or 11, **characterized in that** step b) of receiving the stack (10) of products furthermore comprises:
b1) moving at least the first and/or the second delimitation element (34, 36) in the direction of a lateral face (10a, 10b) of the stack (10) that faces this delimitation element (34, 36); and
b2) preferably moving at least the upper and/or the lower holding element (22, 24, 26, 28, 30, 32) relative to an upper side (10c) or lower side (10d) of the stack (10) that faces this holding element (22, 24, 26, 28, 30, 32), said upper side (10c) and lower side (10d) extending so as to be perpendicular to the lateral faces (10a, 10b) of the stack (10).

## Revendications

1. Dispositif de manutention (2) pour transférer une pile (10) de produits, en particulier de produits pliés, agrafés ou liés, d'une zone de logement (12) dans une zone de dépôt (14),
dans lequel le dispositif de manutention (2) comprend un système de préhension (16), qui peut être déplacé dans trois dimensions et qui est mis au point pour loger, pour déplacer et pour déposer dans la zone de dépôt (14) la pile (10) de produits disposée dans la zone de logement (12),
dans lequel le système de préhension (16) comprend un élément de maintien supérieur (22, 26, 28, 30) pour abaisser un côté supérieur (10c) de la pile (10) logée et un élément de maintien inférieur (24, 32) pour soutenir un côté inférieur (10d), faisant face au côté supérieur (10c), de la pile (10) logée,
dans lequel le système de préhension (16) comprend par ailleurs un premier élément de délimitation (34) latéral et un deuxième élément de délimitation (36) latéral, qui peuvent être associés respectivement à une des deux faces latérales (10a, 10b) se faisant face l'une l'autre d'une pile (10),
**caractérisé en ce que**
l'élément de maintien inférieur (24, 32) est monté de manière à pouvoir pivoter par rapport à au moins un parmi le premier et le deuxième élément de délimitation (34, 36) .

2. Dispositif de manutention (2) selon la revendication 1, **caractérisé en ce que** l'élément de maintien supérieur et l'élément de maintien inférieur (22, 24, 26, 28, 30, 32) peuvent être déplacés l'un par rapport à l'autre.

3. Dispositif de manutention (2) selon la revendication 1 ou 2, **caractérisé en ce que** l'élément de maintien inférieur (24, 32) définit dans une position un plan d'appui (S) pour poser la pile (10) et le premier et le deuxième élément de délimitation (34, 36) s'étendent sensiblement de manière perpendiculaire par rapport au plan d'appui (S) .

4. Dispositif de manutention (2) selon l'une quelconque des revendications précédentes, **caractérisé en ce que** le premier et le deuxième élément de délimitation (34, 36) peuvent être déplacés l'un par rapport à l'autre.

5. Dispositif de manutention (2) selon la revendication 4, **caractérisé en ce qu'**au moins un parmi le premier et le deuxième élément de délimitation (34, 36) est monté de manière à pouvoir coulisser linéairement sur un support (52) du système de préhension (16).

6. Dispositif de manutention (2) selon l'une quelconque des revendications précédentes, **caractérisé en ce que** l'élément de maintien supérieur (22, 26, 28, 30) est monté de manière à pouvoir coulisser linéairement le long d'au moins un parmi le premier et le deuxième élément de délimitation (34, 36).

7. Dispositif de manutention (2) selon l'une quelconque des revendications précédentes, **caractérisé en ce que** l'élément de maintien inférieur (24, 32) est monté de manière à pouvoir coulisser linéairement le long d'au moins un parmi le premier et le deuxième élément de délimitation (34, 36).

8. Dispositif de manutention (2) selon l'une quelconque des revendications précédentes, **caractérisé en ce que** le dispositif de manutention (2) comprend par ailleurs un robot, en particulier un robot à portique ou un robot à bras pliable, et **en ce que** le robot comprend un bras de robot (18) avec une extrémité libre (20), dans lequel le système de préhension (16) est disposé sur l'extrémité libre (20) du bras de robot (18).

9. Plieuse (1), qui comprend les éléments suivants disposés les uns après les autres le long d'une direction de défilement (D) :
au moins un mécanisme de pliage (6) pour plier des supports plats en produits pliés,
un dispositif d'empilage (8) pour former une pile (10) à partir des produits pliés,
une zone d'étalement (12) pour étaler la pile (10) de produits pliés, qui forme une zone de logement (12), et une zone de dépôt (14) associée à la plieuse (1),
**caractérisée en ce que** la plieuse (1) comprend par ailleurs un dispositif de manutention (2) selon l'une quelconque des revendications 1 à 8.

10. Procédé pour transférer des piles (10) de produits, en particulier des produits pliés, agrafés ou liés, depuis une zone de logement (12) dans une zone de dépôt (14), procédé comprenant les étapes :
a) de disposition d'une pile (10) de produits et d'un système de préhension (16) les uns par rapport aux autres dans la zone de logement (12), dans lequel la pile (10) est formée par une multitude de produits placés dessus, dont le produit le plus bas repose à plat dans la zone de logement (12),
b) de logement de la pile (10) disposée dans la zone de logement (12) au moyen du système de préhension (16),
c) de relèvement de la pile (10) logée et de déplacement de la pile (10) hors de la zone de logement (12) dans la zone de dépôt (14) au moyen du système de préhension (16),
d) de dépôt de la pile (10) déplacée dans la zone de dépôt (14),
e) de répétition des étapes a) à d) pour au moins une autre pile (10),
dans lequel l'étape a) de la disposition du système de préhension (16) est effectuée de telle manière que deux faces latérales (10a, 10b) se faisant face l'une l'autre de la pile (10) de produits sont disposées entre un premier et un deuxième élément de délimitation (34, 36) latéral du système de préhension (16) et un côté supérieur (10c) et un côté inférieur (10d) de la pile (10) sont disposés entre un élément de maintien supérieur (22, 26, 28, 30) et un élément de maintien inférieur (24, 32) du système de préhension (16),
**caractérisé en ce que**
l'élément de maintien inférieur (24, 32) se trouve au cours de l'étape a) dans une première position, dans laquelle il ne dépasse pas sensiblement dans un espace intermédiaire entre le premier et le deuxième élément de délimitation (34, 36) latéral, et
dans lequel l'étape b) comprend le déplacement de l'élément de maintien inférieur (24, 32) hors de la première position dans une deuxième position, dans laquelle l'élément de maintien inférieur (24, 32) dépasse dans l'espace intermédiaire entre le premier et le deuxième élément de délimitation (34, 36) latéral et délimite vers le bas l'espace intermédiaire pour former un logement pour la pile (10).

11. Procédé selon la revendication 10, **caractérisé en ce que** l'étape d) du dépôt de la pile (10) déplacée comprend par ailleurs :
- le déplacement de l'élément de maintien inférieur (24, 32) hors de la deuxième position dans la première position et ainsi de déblocage de la pile (10) vers le bas,
- l'entraînement de l'élément de maintien supérieur (22, 26, 28, 30) avec le côté supérieur (10c) de la pile (10) pendant le dépôt jusqu'à ce que le côté inférieur (10d) de la pile (10) repose dans la zone de dépôt (14).

12. Procédé selon l'une quelconque des revendications 10 ou 11, **caractérisé en ce que** l'étape b) du logement de la pile (10) de produits comprend par ailleurs :
b1) le déplacement d'au moins un parmi le premier et le deuxième élément de délimitation (34, 36) en direction d'une face latérale (10a, 10b), tournée vers ledit élément de délimitation (34, 36), de la pile (10), et
b2) de préférence le déplacement d'au moins un parmi l'élément de maintien supérieur et l'élément de maintien inférieur (22, 24, 26, 28, 30, 32) par rapport à un côté supérieur (10c) ou côté inférieur (10d), tourné vers ledit élément de maintien (22, 24, 26, 28, 30, 32), de la pile (10), qui s'étendent de manière perpendiculaire par rapport aux faces latérales (10a, 10b) de la pile (10).
